# EUROPEAN PATENT APPLICATION

(11) **EP 1 217 601 A2**
(43) Date of publication of application: **26.06.2002**
(21) Application number: 01305558.7
(22) Date of filing: 27.06.2001
(51) Int. Cl.: G09G 5/30

(54) **Event-for-change oriented information display method and information processing system using the same method**

(30) Priority: 22.12.2000 JP 2000390340
(71) Applicant: FUJITSU LIMITED, Kawasaki-shi, Kanagawa 211-8588 (JP)
(72) Inventor: Sudo, Takuma, c/o Fujitsu Oasys Develop. Co. Ltd., Nagaoka-shi, Niigata (JP); Okawa, Toru, Kawasaki-shi, Kanagawa 211-8588 (JP)
(74) Representative: Mohun, Stephen John

(57) **Abstract**

A display technology is capable of facilitating a grasp of text information when scrolling the text information at a high speed and selecting a broad block of the text information. An information display method of the present invention comprises a step of displaying the text information by defining a display block thereof in the case of displaying the text information on a screen, a step of detecting a manipulation of moving the display block, a step of displaying the text information during a movement of the display block, and a step of changing a character size or a character pitch of the text information to be displayed. Another information display method of the present invention comprises a step of selecting a partial area of information from the text information, a step of calculating a size of the partial area of information selected from the text information, and a step of changing a character size or a character pitch of the text information to be displayed.

## Description

The present invention relates generally to an information display method and an information display system. The present invention relates more particularly to a display technology suited to displaying the information on an information terminal of which a high-speed scroll is required such as a personal computer, a personal digital assistant (PDA) , amobile telephone, a car navigation system, a TV etc, and also on an information terminal restricted to a small-sized screen.

What is known as this type of information display method may be a display processing method disclosed in Japanese Patent Application Laying-Open Publication No.8-212038. According to this display processing method, lists formanagingamultiplicity of items of data and documents are displayed efficiently. This method is capable of performing a quick display by decreasing a data transfer frequency related to scrolling when displaying the data large enough to exceed a range of the screen.

There arise, however, the following problems inherent in the conventional information display technologies including the technology disclosed in the Publication given above.

To be specific, for example, a display area is required to be moved by manipulating a cursor etc in order to refer to a tremendous amount of documents and data on Browsers and edit windows. It is preferable to move the display area fast. This simple scheme of moving the display area does not make it possible to simultaneously attain a purpose of confirming its contents. For instance, if provided with such a function that the screen transits at a high speed when the cursor key continues to be pressed, it becomes more difficult to confirm the contents due to the fast screen transition. Further, in the case of a handheld terminal having a smaller display area than on a normal personal computer, the request for the fast scroll could not be compatible with the request for facilitating the grasp of the contents.

Moreover, in the case of a function such as selecting a specified block for editing the information (a manipulating function such as cut & paste of the text information and image data), if the selected block extends to a range broad enough to exceed one screen, the problem is that contents of the whole selected block are hard to grasp.

It is a primary object of the present invention, which was devised to obviate the problems inherent in the prior art described above, to provide an information display method and an information display system that are capable of facilitating a grasp of display contents when moving a large quantity of information by , e.g., scrolling on the same screen (or the same window). Namely, the present invention aims at providing a display technology capable of facilitating the grasp of the information in the case of scroll-moving the information at a high speed and selecting a broad block of information.

According to one aspect of the present invention, an information display method comprises a step of displaying information in a predetermined display area, a step of detecting a manipulation of changing a display block of the information displayed in the display area, and a step of displaying the information by changing an attribute in accordance with the detection of the changing manipulation.

Herein, the predetermined display area includes, for example, a screen, a window etc for displaying an image and a text. Further, the manipulation of changing the display block is defined as, e.g., changing a range where the information is displayed, and includes moving the display block by scrolling etc.

According to another aspect of the present invention, an information display method comprises a step of selecting a part of information from processing target information, a step of calculating a size of the part of information, and a step of changing an attribute of the information, wherein if the size of the selected part of information exceeds a size with which the information can be displayed within a predetermined display area, the selected part of information is displayed within the display area by changing the attribute of the part of information or information in an area that contains this part of information.

According to still another aspect of the present invention, an information processing system comprises a display control unit for displaying processing target information in a predetermined display area, a detection unit for detecting a manipulation of changing a display block of the information displayed in the display area, and a display information control unit for getting the information displayed in the display area by changing an attribute in accordance with the detection of the changing manipulation.

Preferably, the attribute may be a display size of each of elements structuring the information, or a pitch between the elements structuring the information. Herein, the structuring elements of the information are characters or images etc of the text information. Further, the display size of each of the structuring elements of the information is, e.g., a display size of the character or the image. Moreover, the pitch between the structuring elements of the information is , e.g., a pitch between the characters or the images.

Preferably, the display information control unit may scale down the display size or the pitch defined as the attribute smaller than in a normal display state for displaying the information in the predetermined display area.

Preferably, the display information control unit may get the information displayed in a way that changes the attribute in a direction of changing the display block.

Preferably, the information may be text information, the structuring elements maybe characters of the text information, and the display information control unit, during the changing manipulation, may get the text information displayed in different character sizes or at different character pitches between one or more specified lines within the display area and lines other than the specified lines, or between one or more specified columns within the display area and columns other than the specified columns, or between specified segments in the display area and a region excluding the specified segments.

Preferably, the display information control unit, during the changing manipulation, may get the information displayed in a way that sets a different attribute corresponding to a position in the display area.
Preferably, the display information control unit, during the changing manipulation, may get the information with the changed attribute displayed in a partial space within the predetermined display area, and gets the same information displayed with a different attribute in other space within the display area.

Preferably, the display information control unit, during the changing manipulation, may get the information with the changed attribute displayed in the predetermined display area, and gets the same information displayed with a different attribute in a display area different from the former display area.

Preferably, the display information control unit may set the attribute on the basis of a speed at which the display block is changed.

Preferably, the information may be text information, and the structuring elements may be characters of the text information.

According to a further aspect of the present invention, an information processing system comprises a manipulation unit for selecting a part of information from processing target information, a calculation unit for calculating a size of the part of information, and an attribute changing unit for changing an attribute of the information, wherein the attribute changing unit, if the size of the selected part of information exceeds a size with which the information can be displayed within a predetermined display area, gets the selected part of information displayed within the display area by changing the attribute of the part of information or information in an area that contains this part of information.

According to a still further aspect of the present invention, there is provided a readable-by-computer recording medium recorded with a program executed by a computer to actualize any of the functions given above. The present invention can be embodied in such a way that the computer executes this program, thereby functioning as the information processing system for displaying the information.

According to the present invention, the screen may include a window in a multi-window system of the computer in addition to the screen itself as a display screen of the display device.

As discussed above, according to the present invention, during the movement of the display block, the information is displayed in a way that changes the attribute, e.g., a display size of the display target information, thereby facilitating the grasp of the information.

Further, according to the present invention, the block of information is selected, and, if this block information is large enough to exceed a displayable size within one screen, a size of this block of information or of a display area containing this block of information is scaled down, whereby the selected block of information is displayed within one screen. This facilitates the grasp of a content of the selected block of information.

Preferred embodiments of the present invention will now be described, by way of example only, with reference to the accompanying drawings, in which:
FIG. 1 is a diagram showing an architecture of an information processing system in an embodiment of the present invention;
FIG. 2 is a diagram showing a structure of a program in the embodiment of the present invention;
FIG. 3 is a conceptual diagram showing a screen display method;
FIG. 4 is a conceptual diagram showing the screen display method;
FIG. 5 is a conceptual diagram showing the screen display method;
FIG. 6 is a conceptual diagram showing the screen display method;
FIG. 7 is a conceptual diagram showing the screen display method;
FIG. 8 is a conceptual diagram showing the screen display method;
FIG. 9 is a conceptual diagram showing the screen display method;
FIG. 10 is a conceptual diagram showing the screen display method;
FIG. 11 is a conceptual diagram showing the screen display method;
FIG. 12 is a view showing a display example of moving a screen by scrolling;
FIG. 13 is a view showing a display example of how a range is specified;
FIG. 14 is a flowchart showing a display process;
FIG. 15 is a flowchart showing a process of obtaining a key event;
FIG. 16 is a flowchart showing a display process of changing a character size at the same scaling factor within the screen;
FIG. 17 is a flowchart showing a modified example of the display process of changing the character size at the same scaling factor within the screen;
FIG. 18 is a flowchart showing a focus line emphasized display process;
FIG. 19 is a flowchart showing a modified example of the focus line emphasized display process;
FIG. 20 is a flowchart showing an intra screen stepwise scale-down display process;
FIG. 21 is a flowchart showing a modified example of the intra screen stepwise scale-down display process;
FIG. 22 is a flowchart showing an intra screen curvilinear scale-down display process;
FIG. 23 is a flowchart showing a selected block display process;
FIG. 24 is a conceptual diagram showing a method of updating data on a VRAM 4;
FIG. 25 is a conceptual diagram showing a method of updating data on a VRAM 4;
FIG. 26 is a view showing a method of displaying segments selected from lines of text information; and
FIG. 27 is a view showing a modified example of the method of displaying segments selected from the lines of text information.

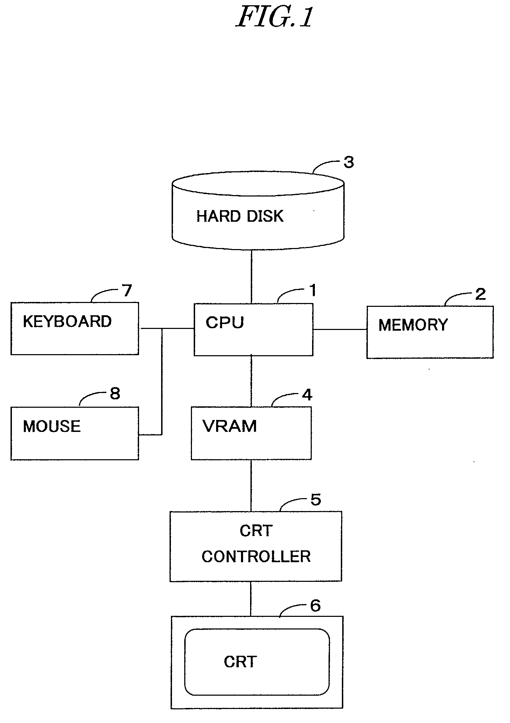

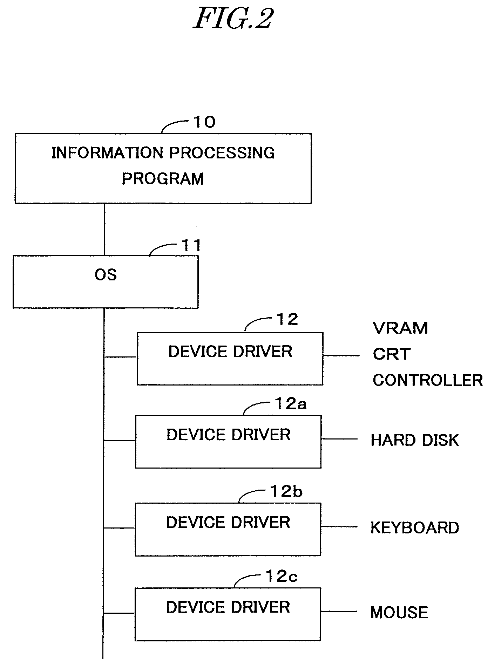

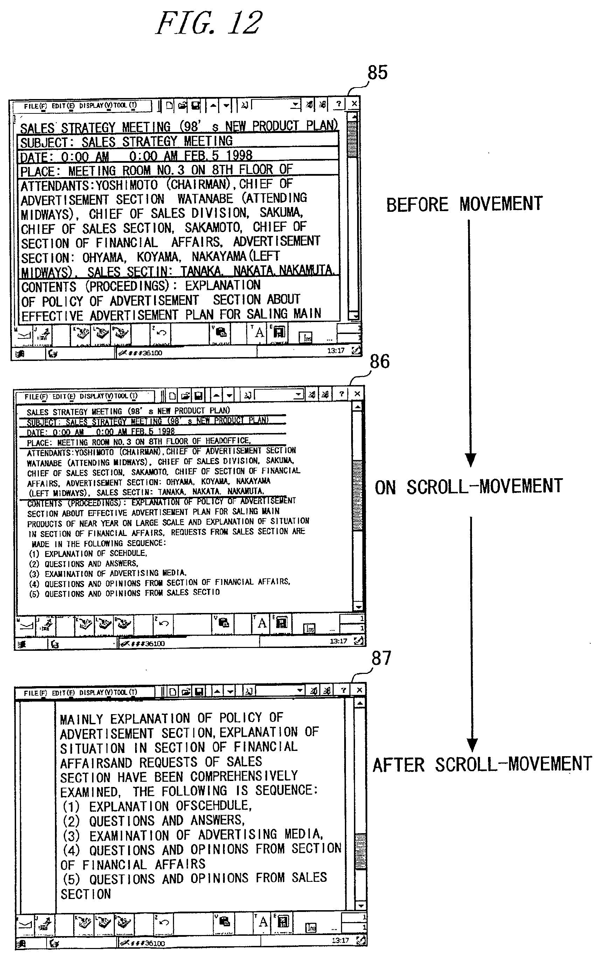

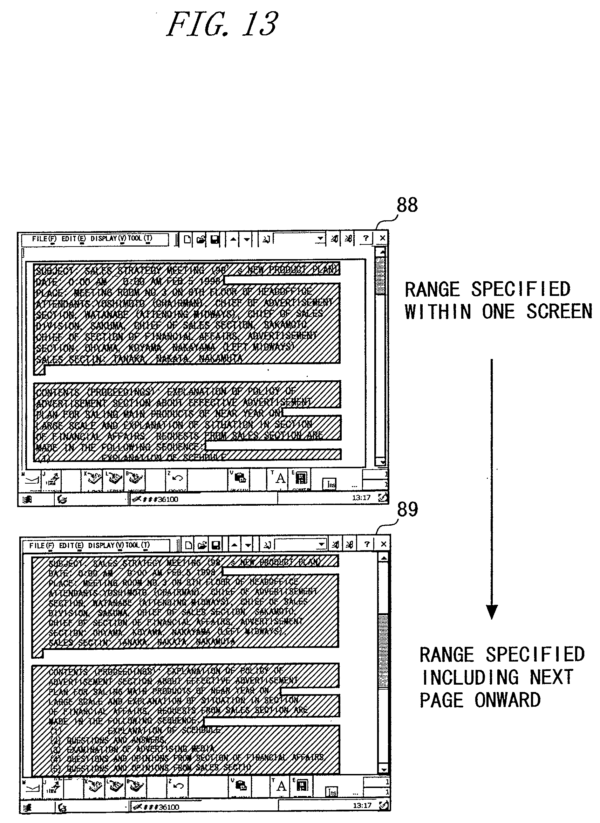

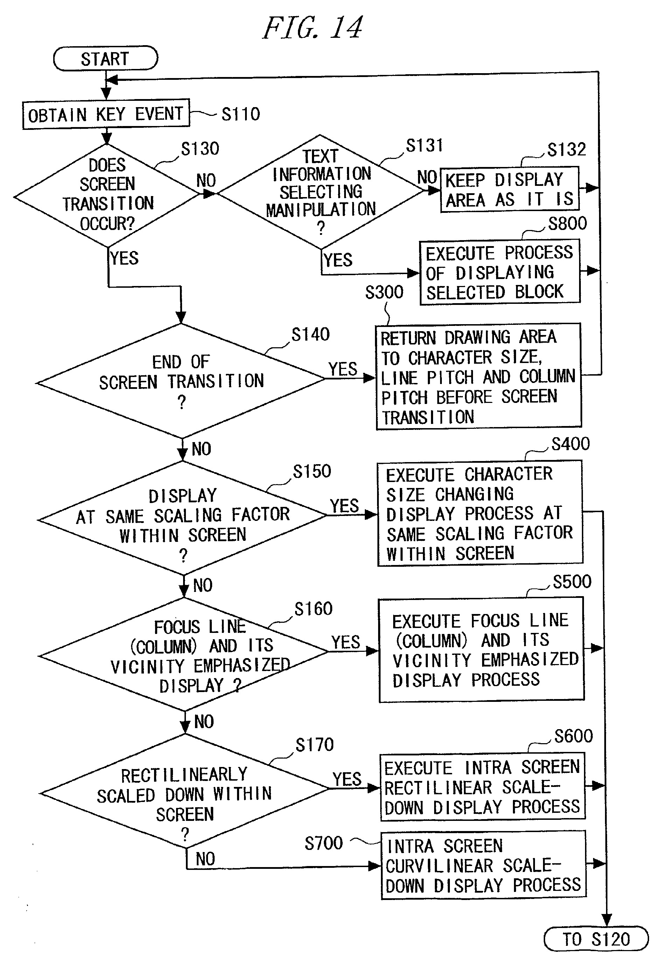

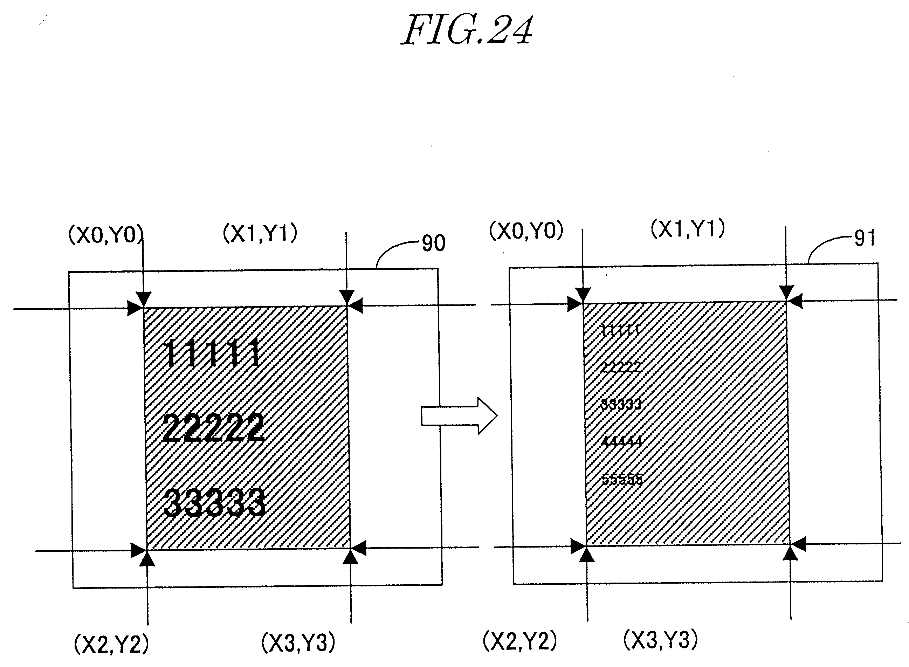

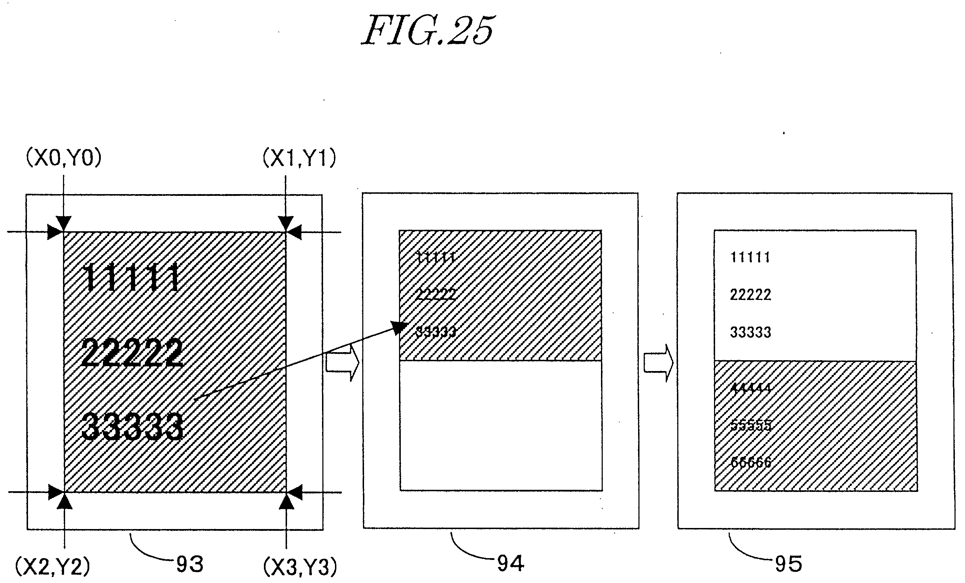

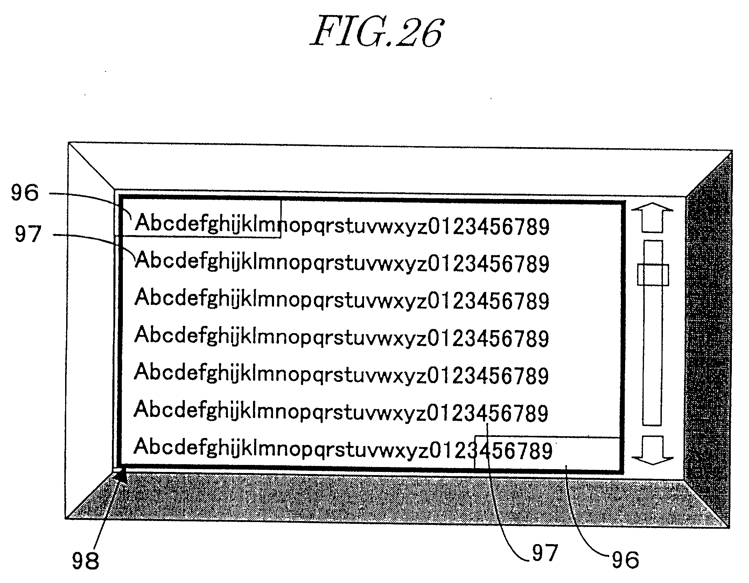

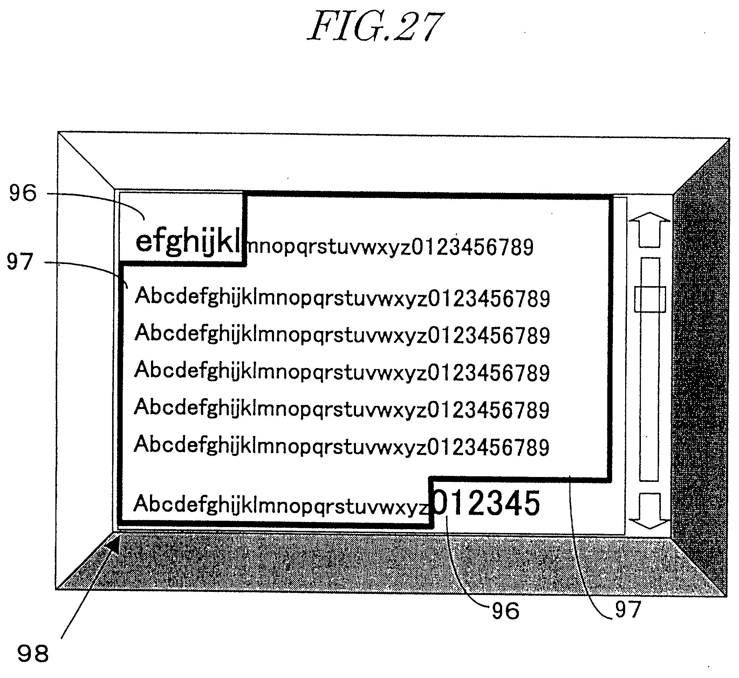

An information processing system in a preferred embodiment of the present invention will hereinafter be described with reference to FIGS. 1 through 27. FIG. 1 is a diagram showing an architecture of an information processing system in the embodiment of the present invention . FIG. 2 is a diagram showing a structure of a program executed by a CPU 1 shown in FIG. 1. FIGS . 3 through 11 are diagrams each showing a concept of a method of displaying a screen on a CRT 6 in the information processing system in the present embodiment. FIGS. 12 and 13 show display examples of the screen in the information processing system in the present embodiment. FIGS. 14 to 23 are flowcharts each showing display steps based on the program executed by the CPU 1. FIGS. 24 and 25 are diagrams each showing a concept of a method of updating the data on the VRAM 4 shown in FIG. 1. FIGS. 26 and 27 show examples of the display screen with a function of selecting a partial area from text information.

### <Architecture of Information Processing System>

FIG. 1 is the diagram showing the architecture of this information processing system. This information processing system includes a hard disk 3 for recording the program and the data, a memory 2 for temporarily storing the program and the data, and the CPU 1 for executing the program stored in the memory 2. The information processing system further includes the CRT 6 for displaying the data outputted by the CPU 1, the VRAM 4 for temporarily storing the data displayed, a CRT controller 5 for reading the data from the VRAM 4 and transferring and displaying the read-out data to and on the CRT 6, a keyboard 7 for a user to manipulate the present information processing system, and a mouse for the user to manipulate it (each of the keyboard 7 and the mouse 8 corresponds to a manipulation unit) .

FIG. 2 illustrates the structure of the program executed by the CPU 1. According to the information processing system in this embodiment, the CPU 1 executes 3-tiered programs such as an information processing program 10 (which is a so-called application program), an OS 11 and device drivers 12 as shown in FIG. 2, thereby providing a function of displaying text information and an image.

The information processing program 10 functions to read pieces of information stored in the hard disk 3 and the memory 2, and display these pieces of information as they are or with an addition of some changes specified by the user as text information and image on the CRT 6. This information processing program 10 corresponds to a user interface module such as a word processor, a text editor, E-mail browsing software, spreadsheet software, directory management software, database management software etc.

The OS 11 functions to control the information processing system in this embodiment, thereby providing an environment where the information processing program 10 is executed.

The device drivers 12 are categorized as programs for controlling the hardware such as the CRT 6, the hard disk 3, the keyboard 7 and the mouse 8 in accordance with instructions given from the OS 11.

### <Outline of Display of Text Information>

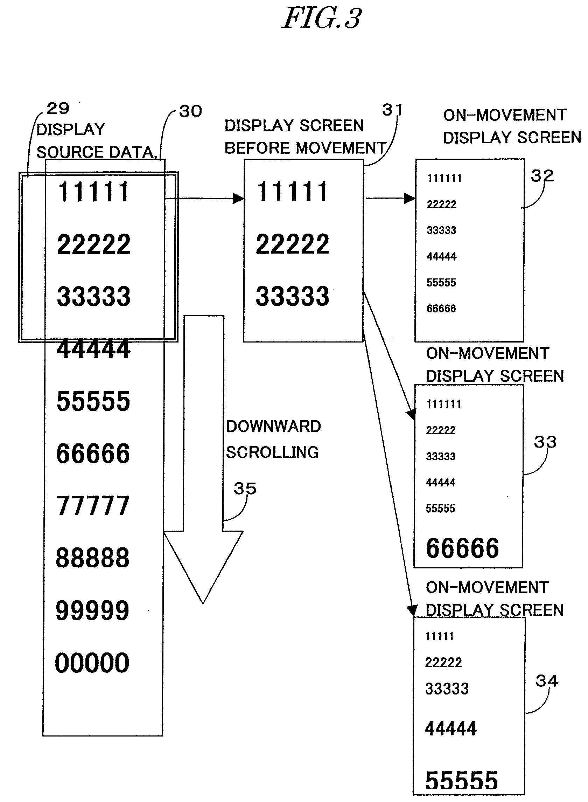

FIGS. 3 through 6 each show an outline of the screen displayed on the CRT 6 provided in the information processing system in this embodiment. The information processing program 10 executed by the CPU 1 reads text data from the hard disk 3, then creates display data shown in FIGS . 3 through 6, and displays the display data on a window 29 of the CRT 6 through the device drivers 12. The window 29 may be herein defined as one screen partially configuring a multi-window system incorporated into the OS 11.

For example, when the user operates a text file by use of the text editor, display source data 30 shown in FIG. 3 are transferred to the memory 2 from the hard disk 3, and some pieces of the data 30 are displayed as a display screen before being moved on the CRT 6. In the case of browsing all of contents of the display source data 30, the user presses a shift key (with an arrowhead) of the keyboard 7 or manipulates an unillustrated scroll bar in the window 29 with the mouse 8. With this manipulation, the user moves a display block (range) and thus displays the display source data 30 as screens in sequence. This manipulation is called a scroll. The information processing program 10 provides the user with the function of scrolling the text information by use of the keyboard 7 or the mouse plus the scroll bar in the window 29.

According to the conventional information processing program, a document, the text and the image are displayed based on a set format (such as a character pitch and a line pitch), a character font size, an image size, a display scale-down ratio (zoom) that can be set by the application and a resolution of the screen. This kind of conventional display mode is termed a normal display mode.

In the thus configured information processing system, when scrolling a large quantity of display information, it becomes more convenient as a speed of the scroll movement is higher. If this scroll movement is performed at a high speed, however, it is difficult to grasp a content of the display information which is in the process of being scrolled.

For overcoming a contradiction between the high-speed scroll and the grasp of the content, the information processing system in this embodiment performs the screen display as shown in FIGS. 3 through 6.

An arrowhead 35 indicates a scroll direction in FIG. 3. When the user executes consecutive scrolling in the direction of the arrowhead 35 in FIG. 3, the information processing program 10 detects this user's event through the device driver 12b corresponding to the keyboard 7 or the device driver 12c corresponding to the mouse 8 and the OS11. Then, the information processing program 10 moves the display block of the display source data 30 in the direction of the arrowhead 35. If the moving operation is consecutive, the text information (a part of the display source data 30) on the screen is consecutively scrolled.

At this time, the information processing program 10 displays on-movement display screens 32 - 34 corresponding to predetermined set modes. Note that a change operation, for example, an operation of changing the block in which to display the display target information is referred to as a moving operation in this embodiment.

On the display screen 32 that is in the process of being moved, the characters on the screen (on the window for displaying the text information) are scaled down uniformly at a predetermined scaling factor. The screen on which to display a block of 11111 ~ 33333 is thereby extended to a display block of 11111 ~ 66666, and the data are scrolled in the direction of the arrowhead 35 in this state.

On the on-movement display screen 33, the characters excluding the line of 66666 are scaled down at the predetermined scaling factor and thus displayed. On the other hand, the forehead line of 66666 in the moving direction on the screen is displayed as it is without being scaled down. The forehead line in this mode in the moving direction on the screen is called a focus line . The focus line is a line on which the user especially focuses during the scroll. According to the present information processing program 10, the user is able to specify the number of lines (N-lines) including the focus line which are not scaled down. On the display screen 33 in FIG. 3, the number of lines is specified such as N = 1. A predetermined number of lines including the focus line with no character scale-down, correspond to "one or more specified lines".

On the on-movement display screen 34, the characters are displayed in a way that changes stepwise the scaling factor in the moving direction of the display block as indicated by the arrowhead 35. In this embodiment, a display process of thus changing stepwise the scaling factor may include a mode of changing the scaling factor rectilinearly, and a mode of changing the scaling factor curvilinearly.

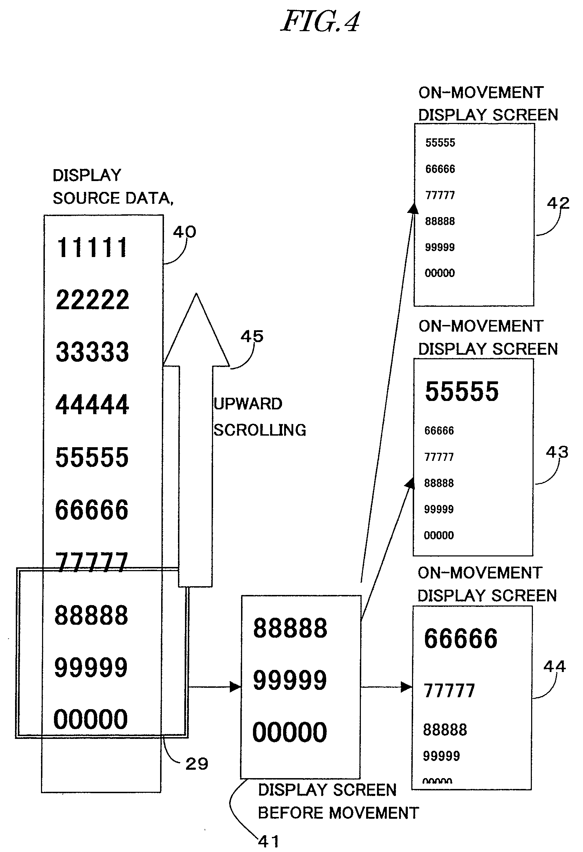

FIG . 4 shows a case where the moving direction is set upward as indicated by an arrowhead 45. In this case also, a before-movement display screen 41 is displayed as on the on-movement display screens similarly when scrolled in the downward direction described above. On an on-movement display screen 42, the characters on the screen are scaled down uniformly at a predetermined scaling factor. Further, on an on-movement display screen 43, the lines excluding a predetermined number "N" of lines (the number-of-lines N can be separately specified by the user, and is set such as N = 1 on the display screen 43 in FIG. 4) including the focus line, are scaled down. Moreover, on an on-movement display screen 44, the scaling factor is changed stepwise in the moving direction of the display block.

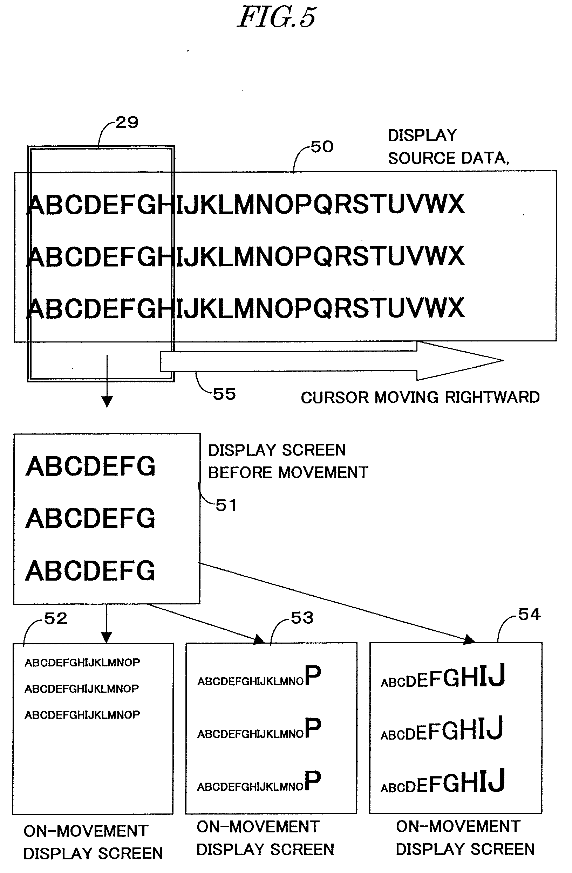

FIG. 5 shows a case where the moving direction is set rightward as indicated by an arrowhead 55. In this case also, a before-movement display screen 51 is, as in the case described above, displayed as on-movement display screens 52 - 54. On the on-movement display screen 52, the characters on the screen are scaled down uniformly at a predetermined scaling factor. Further, on an on-movement display screen 53, the lines excluding a predetermined number "N" of columns (the number-of-columns N can be separately specified by the user, and is set such as N = 1 on the display screen 53 in FIG. 5) including focus columns (line ends indicated by PPPPP in the moving direction of the screen) , are scaled down. Moreover, on an on-movement display screen 54, the scaling factor is changed stepwise in the moving direction of the display block.

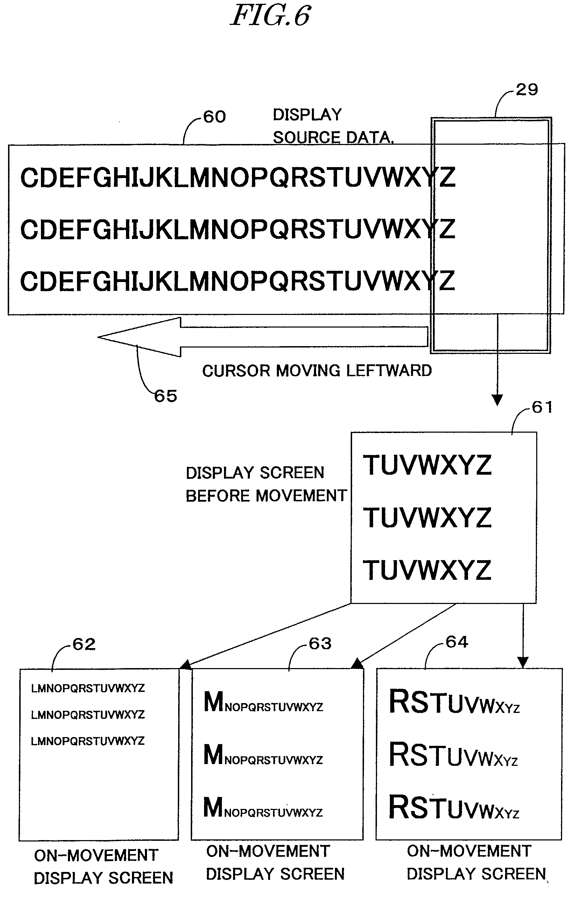

FIG. 6 shows a case where the moving direction is set leftward as indicated by an arrowhead 65. In this case also, a before-movement display screen 61 is, as in the case described above, displayed as on-movement display screens 62 - 64. On the on-movement display screen 62, the characters on the screen are scaled down uniformly at a predetermined scaling factor. Further, on an on-movement display screen 63, the lines excluding a predetermined number "N" of columns (the number-of-columns N can be separately specified by the user, and is set such as N = 1 on the display screen 63 in FIG. 6) including focus columns (line ends indicated by MMMMM in the moving direction of the screen) , are scaled down. Moreover, on an on-movement display screen 64, the scaling factor is changed stepwise in the moving direction of the display block.

FIG. 12 shows a manipulation example in which the text information is actually scrolled, and the character on the screen are scaled down uniformly at a predetermined scaling factor in the information processing system for performing the display described above. When the information displayed as on a screen 85 before being moved is scrolled downward on the screen, the information is scaled down as on a screen 86, and a display block is thus extended. The scrolling proceeds in this state, and, after the scroll, the information is displayed again in the normal character size as on a screen 87.

FIG. 13 shows a function of selecting a partial area in the text information as other function of the information processing system in this embodiment. This function corresponds to a before-cut manipulation with respect to, e.g., cut & paste. If a block to be selected is beyond one screen in the manipulation of selecting this partial area, the information processing system in this embodiment scales down the character size till the block does not exceed one screen, and the whole selected block is thus displayed (that is a screen 89 shown in FIG. 13).

Referring to FIG. 13, the selected partial area takes a rectangular shape. By contrast, as shown in FIG. 26, in the case of a shape other than the rectangular shape wherein a partial area 97 starts midways of a line and ends midways of a line, the character size may similarly be scaled down so that a rectangular display area 98 containing the selected area does not exceed one screen.

### <Data Processing Example>

An operation of the information processing system in this embodiment will be explained referring to FIGS. 14 through 25.

FIGS. 14 to 16, 18, 20, 22 and 23 are flowcharts each showing processes of the information processing program 10 executed by the CPU 1.

FIG. 14 is the flowchart showing an outline of the whole processes of the information processing program 10 executed corresponding to events each occurred with a user's key or mouse manipulation (which will be called key events).

To start with, the information processing program 10 obtains the key event (step 110 that will hereinafter be abbreviated to S110). The obtainment of the key event may be defined as a process of detecting a type of the key event occurred and the number of occurrences thereof.

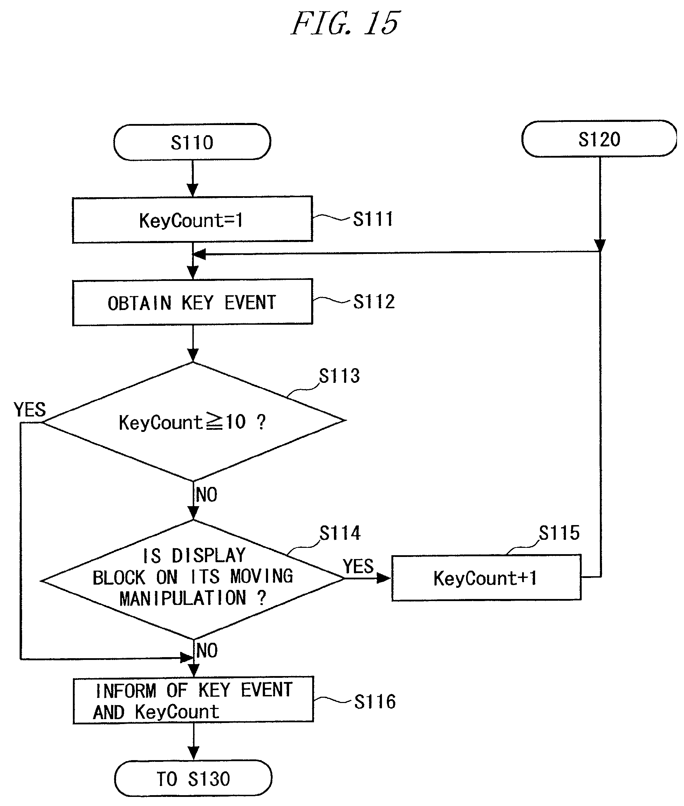

FIG. 15 shows details of the key event obtaining process. To begin with, the information processing program 10 initializes a parameter **KeyCount** for counting the number of the key events to "1" (S111). Next, the information processing program 10 waits till the key event is obtained (S112). When the key event occurs, the information processing program 10 judges whether or not **KeyCount** is equal to or larger than 10 (S113). If **KeyCount** is less than 10, the information processing program 10 judges whether or not the moving manipulation of the display block is being performed (whether or not, for example, the key is being pressed or the scroll bar is being manipulated) (S14). Then, the information processing program 10 counts up **KeyCount** if the moving manipulation of the display block is being performed (S115). Thereafter, the information processing program 10 returns the control to S112.

Whereas if the moving manipulation of the display block is not being performed, the information processing program 10 informs a higher-order module of the key event type and **KeyCount**, and proceeds to S130.

While on the other hand, if **KeyCount** is 10 or larger (S113), the information processing program 10 finishes the process of obtaining the key event informs the higher-order module of the key event type and **KeyCount**. Then, the information processing program 10 advances to S130.

After executing the key event process, the information processing program 10 judges whether or not a movement of the screen display block (which will hereinafter be referred to as a screen transition) occurs due to this key event (S130). If the screen transition occurs, the information processing program 10 executes processes in S300 ~ S700 diverting from S140 ~ S170 and subsequent to the display during the screen transition.

If the event is an end of the screen transition, the format is set back to the character size, the line pitch and the column pitch before the screen transition, and the text information after the end of the transition is displayed (S300). Thereafter, the information processing program 10 loops the control back to S110.

Whereas if the event is not the end of the screen transition, i.e., if the event is the movement of the screen display block, the information processing program 10 executes any one of the processes in S400 ~ S700 in accordance with a preset processing mode. This processing mode is recorded as a flag for indicating the same processing mode in the memory 2.

### <Display of Changing Character Size at Same Scaling factor within Screen>

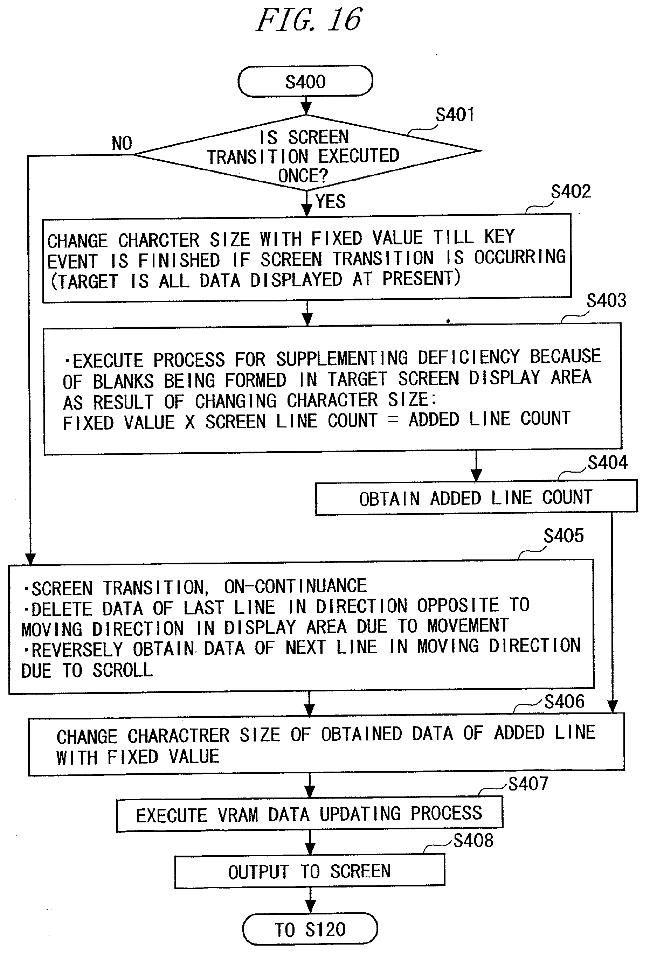

If the set processing mode is a display at the same scaling factor within the screen, the information processing program 10 scales down the character size, the line pitch and the column pitch of the text information at a predetermined fixed scaling factor, scrolled on the screen with the screen transition (S400). A display at this time is shown by way of the screen 32 in FIG. 3. Further, details of this process are shown in the flowchart in FIG. 16.

At first, the information processing program 10 judges whether a change in content of the display due to the screen scroll is a first event or one of second and subsequent events of the consecutive screen transitions (S401).

If judged to the first event of the screen transition, the information processing program 10 changes (scales down) the text information on the screen now being displayed at the fixed scaling factor and thus displays the scaled down text information (S402). As a result, blanks are formed on the screen, and hence the information processing program 10 counts the number of lines (or the number of columns, which is hereinafter the same) of the text information displayed in those blanks (S403). In this case, the number of lines supplementing the blanks can be calculated based on the character size after being scaled down at the fixed scaling factor.

Next, the information processing program 10 obtains the text information ranging to a line count corresponding to the blanks in the moving direction of the screen transition (S404). Subsequently, the information processing program 10 scales down the character size, the line pitch and the column pitch of the thus obtained text information similarly at the predetermined fixed scaling factor (S406).

Based on what has been done above, the information processing program 10 updates the VRAM 4 with the display data scaled down (S407). The data on the VRAM 4 are displayed on the CRT 6 (S408). The device driver 12 executes updating the VRAM 4 and displaying on the CRT 6 through the OS 11 in accordance with indications given from the information processing program 10.

FIG. 24 shows a process of developing the text information in the display block on the VRAM 4. The device driver 12 receives the text information corresponding to 1111 ~ 5555 from the information processingprogram 10, and develops the display data in a bitmap format in coordinate positions ((X0, Y0) ~ (X3, Y3)) on the VRAM 4 which correspond to the display positions on the CRT 6.

On the other hand, in the process in S401, if the screen transition is judged to be one of the second and subsequent events , the screen transition continues, and a continuous process is executed (S405). Namely, with the movement of the display block, the data of the lines (or columns) in positions opposite to the moving direction among pieces of data displayed at the present, are deleted from the display block. Next, the text information positioned in the moving direction is obtained.

The process of changing the character size, the line pitch and the column pitch of the thus updated text information in the display block, is executed (S406). Then, the VRAM 4 is updated (S407), and a screen output is executed (S408). Thereafter, the control is again returned to the obtainment of a next key event (S120, S112).

With those processes executed, the character size, the line pitch and the column pitch are scaled down as on the display screen 32 in FIG. 3, the display screen 42 in FIG. 4, the display screen 52 in FIG. 5 or the display screen 62 in FIG. 6 with the result that the display block is extended, and then the text being scrolled is displayed.

### <Emphasized display of Focus Line (Column)>

If the set process mode is an emphasized display of the focus line, the character size, the line pitch and the column pitch of the lines excluding the predetermined number of lines (N-lines) containing the focus line, are scaled down at the predetermined fixed scaling factor. Then, the focus line is enhanced and displayed as seen on the on-movement display screen 33 in FIG. 3 or the on-movement display screen 43 in FIG. 4 (S500). This is the case where the moving directions of the display block are set upward and downward. Similarly when the moving directions are set rightward and leftward, the line pitch and the column pitch of the lines excluding the predetermined number of lines (N-lines) containing the focus line, are scaled down at the predetermined fixed scaling factor. Then, the focus line is enhanced and displayed as seen on the on-movement display screen 53 in FIG. 5 or the on-movement display screen 63 in FIG. 6.

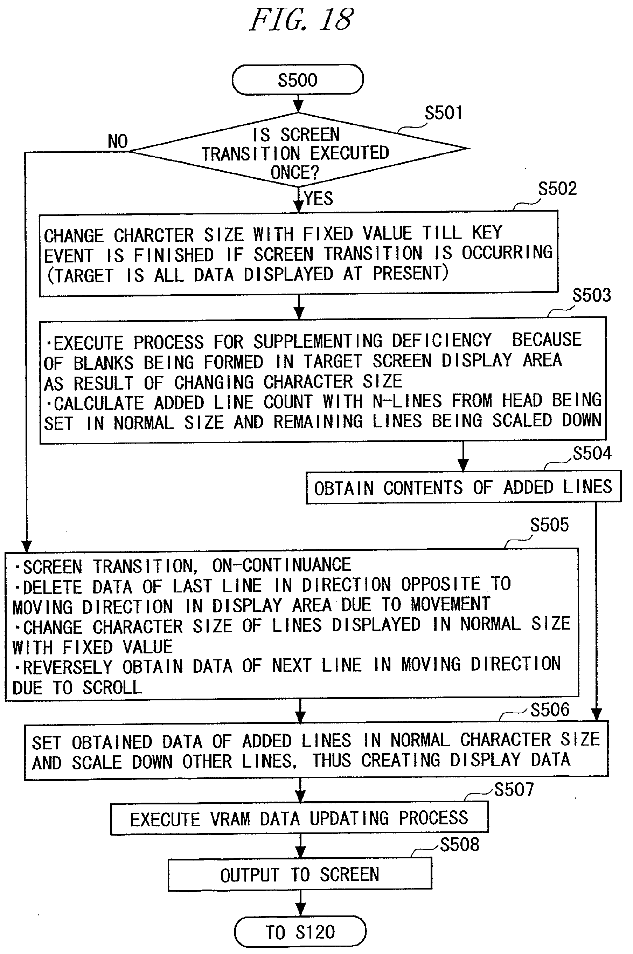

The number-of-lines (or number-of-columns) N with no scale-down is specified beforehand by the user. The case where N = 1 is exemplified as on the display screen 33 etc that is being moved in FIG. 3. The focus line and its vicinity are thereby enhanced and thus displayed. Details of this process are shown in the flowchart in FIG. 18.

Referring to FIG. 18, as in the case of FIG. 16, the information processing program 10 judges whether the change in content of the display due to the screen scroll is the first event or one of second and subsequent events of the consecutive screen transitions (S501).

If judged to the first event of the screen transition, the information processing program 10 changes (scales down) the text information on the screen now being displayed at the fixed scaling factor and thus displays the scaled down text information (S502). As a result, blanks are formed on the screen, and hence the information processing program 10 counts the number of lines (or the number of columns) of the text information displayed in those blanks (S503). In this case, unlike the case taking the same scaling factor within the screen in FIG. 16, the information processing program 10 counts the lines by the predetermined number-of-lines N (or the columns by the predetermined number-of-columns N) preset by the user among the lines supplementing the blanks with the normal character size with no scale-down.

Next, the information processing program 10 obtains the text information ranging to a line count corresponding to the blanks in the moving direction of the screen transition (S504). Subsequently, the information processing program 10 creates the display data of the N-lines (N-columns) from the head in the screen transit direction in the text information obtained with the normal characters of which the character size, the line pitch and the column pitch are not scaled down. Further, the information processing program 10 creates the display data of other lines after the N-lines (other columns after the N-columns) with the characters scaled down at the predetermined scaling factor (S506). Then, the information processing program 10 updates the VRAM 4 with the created display data (S507). The data on this VRAM 4 are displayed on the CRT 6 (S508).

On the other hand, in S501, if the screen transition is judged to be one of the second and subsequent events, the screen transition continues, and the continuous process is executed (S505). Namely, with the movement of the display block, the data of the lines (or columns) in last positions opposite to the moving direction among pieces of data displayed at the present, are deleted from the display block. Next, the text information positioned in the moving direction is obtained.

With respect to the thus updated text information in the display block, in the same way as the above-mentioned, the information processing program 10 creates the display data of the N-lines (N-columns) from the head in the moving direction with the normal character font that is not scaled down . Moreover, the information processing program 10 creates the display data of the lines after the N-lines (the columns after the N-columns) by scaling down them at the predetermined scaling factor (S506). Further, the VRAM 4 is updated (S507), and the screen output is executed (S508). Thereafter, the control is again returned to the obtainment of a next key event (S120, S112).

With these processes executed, the text information being scrolled is displayed with the normal character size with no scale-down of only the predetermined N-lines containing the focus line as on the display screen 33 in FIG. 3 and the display screen 43 in FIG. 4 (FIGS. 3 and 4 show the case where N = 1). This is the same with respect to a case where the moving directions are set sideways as on the display screen 53 in FIG. 5 or the display screen 63 in FIG. 6.

### <Intra Screen Rectilinear Scale-down Display Process and Intra Screen Curvilinear Scale-down Display Process>

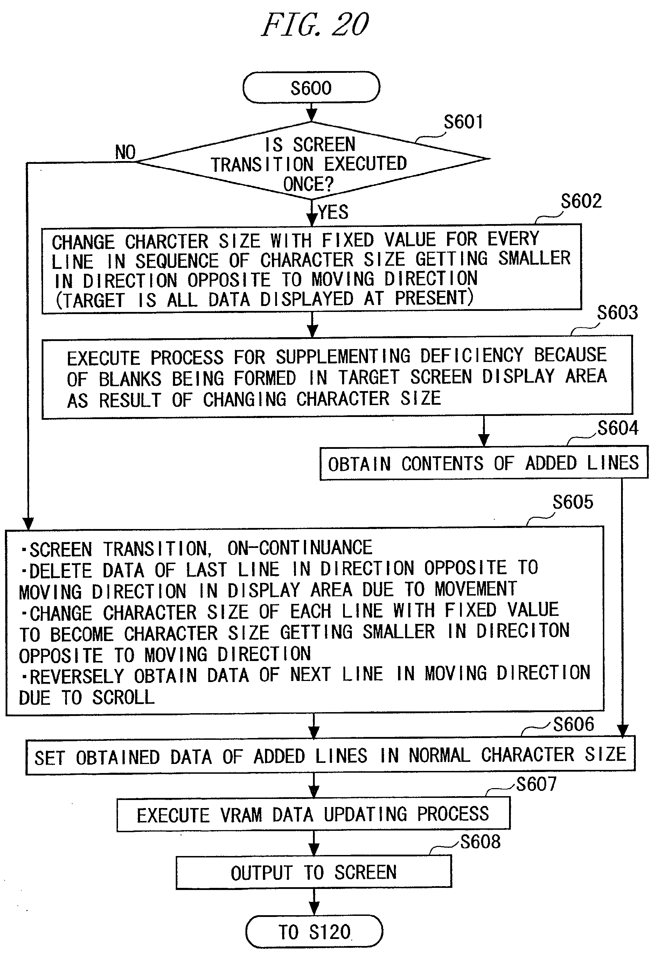

If the set process mode is an intra screen rectilinear scale-down display, as shown on the display screen 34 being moved in FIG. 3 and the screen 54 being moved in FIG. 5, the character size, the line pitch and the column pitch are scaled down and displayed on the line unit (or column unit) in the direction opposite to the scroll direction. Details of this process are shown in the flowchart in FIG. 20.

Processes in FIG. 20 are substantially the same as the processes in FIG. 16, however, the process in S602 is different from S402 in FIG. 16, and the process in S605 is different from S405 in FIG. 16.

That is, the processes in FIG. 16 are executed in such a mode that the character size, the line pitch and the column pitch are the same within the screen. The processes in FIG. 20 are executed in a mode of being displayed with the characters of which those values become smaller in the direction opposite to the moving direction.

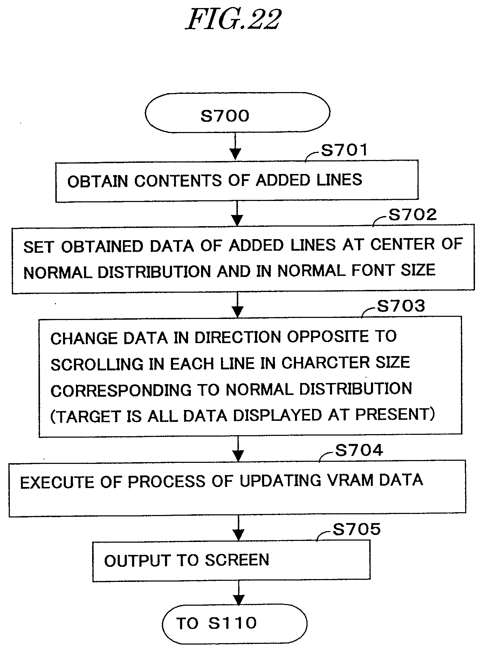

If the set process mode is the intra screen curvilinear scale-down display, the character size, the line pitch and the column pitch are curvilinearly scaled down in the moving direction, and the text information is thus displayed. Details of this process are shown in FIG. 22.

To start with, the information processing program 10 obtains the text information of the lines (or the columns, which is hereinafter the same) that should be added to the display block in the scroll direction (S701).

A position of the head line among the added lines is set as a center of a normal distribution, and the character size, the line pitch and the column pitch are not scaled down (S702). Further, with respect to the lines after the head line which are positioned in the opposite direction to the scroll direction on the screen, the character size, the line pitch and the column pitch are scaled down in accordance with a distribution curve of the normal distribution, and the display data are thus created (S703). In this case, a spread of the normal distribution is determined based on a line count corresponding to a standard deviation retained as a parameter specified by the user in the memory 2.

Based on the display data described above, the VRAM 4 is updated (S704), and the data are displayed on the CRT 6 (S705).

### <Text Information Selecting Manipulation>

It is judged in a process in S130 of the flowchart in FIG. 14 that the user's manipulation is not the movement of the screen display block (not the screen transition) , and it is judged next whether or not the manipulation is a text information selecting manipulation (S131). If not the text information selecting manipulation, the information processing program 10 in the information processing system in this embodiment keeps the display area on the screen as it is (S132). Thereafter, the information processing program 10 loops the control back to S110.

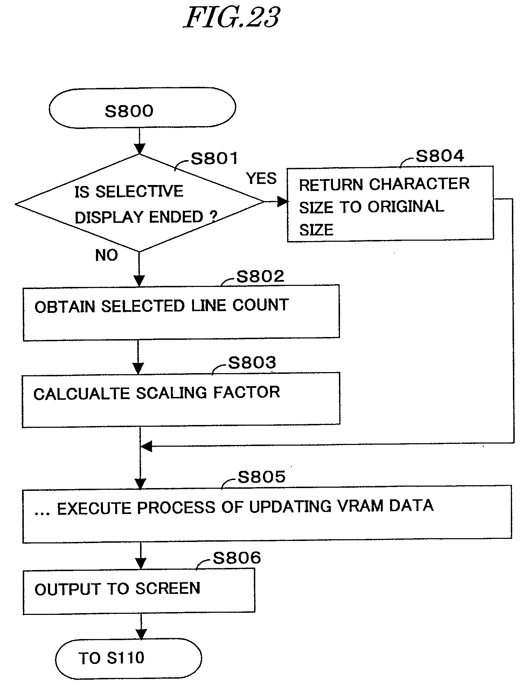

Whereas if being the text information selecting manipulation, the character size etc is scaled down corresponding to a block size thereof (S800). Details of this process are shown in the flowchart in FIG. 23.

To begin with, the information processing program 10 judges whether the event is an end of the text information selecting manipulation or not (S801). If being the end of the selecting manipulation, the information processing program 10 sets the character size etc back to the normal size (S804). Thereafter, the information processing program 10 generates the display data from the selected text information by use of the characters having this size, and updates the VRAM 4 (S805). Further, the data of the VRAM 4 are outputted to the screen (S806).

Whereas if not the end of the selecting manipulation, the information processing program 10 obtains a line count selected (S802). Next, the information processing program 10 calculates a scaling down scaling factor at which the text information corresponding to this line count is displayed on the screen (S803). Next, the information processing program 10 generates the display data from the selected text information by use of the characters of which the size is determined based on this scaling factor, and updates the VRAM 4 (S805). Moreover, the data of the VRAM 4 are outputted to the screen (S806).

### <Effects of Embodiment>

As discussed above, according to the information processing system in this embodiment, when performing the screen transition such as scrolling etc, the character size is scaled down, whereby the text information in the broader range than normal is displayed on the screen. Therefore, this makes it easier to grasp the contents of the text information that is being scrolled. In that case, the text information of the predetermined number-of-lines N containing the focus line or the predetermined number-of-columns N containing the focus column, may be displayed with the characters having the normal character size, and may also be displayed with the characters of which the lines or the columns other than those predetermined are scaled down at the predetermined scaling factor. This mode enables the user to enhance the newly displayed line (or column) about which the user has the highest concern during the scroll.

Moreover, the text information may also be displayed with the characters of which the character size is scaled down rectilinearly in the direction opposite to the scroll direction. In this mode, the character size is scaled down stepwise from the focus line or column about which the user has the concern, thereby preventing the character size from being scaled down extremely and abruptly. Further, the characters may also be scaled down at a curvilinear variation rate as in the normal distribution. This mode makes it feasible to display the focus line or column and its vicinity in enhancement with a natural variation.

Furthermore, the information processing system in this embodiment, if the selected block when selecting the text information exceeds one screen, scales down the character size enough to be embraced within one screen and thus displays the text information. This makes it easier to grasp the contents in the selected block and to confirm the selected block on the occasion such as cut & paste etc.

### <Modified Example>

In the embodiment discussed above, the scaling factor for scaling down the character size is one of the predetermined fixed values without depending on the key manipulation. The character size, the line pitch and the column pitch may also be set based on speeds of the key manipulation and of the scroll manipulation of the mouse 8 or a moving velocity of the screen and so on. For instance, when detecting the user's event such as consecutively pressing the key (arrowhead key) for specifying the movement of the screen, the scaling factor of scaling down the character may be set smaller as the time for consecutively pressing the key becomes longer. Further, the scaling factor of scaling down the character may be set smaller as the scroll manipulation of the mouse 8 gains a higher speed. This can be applied to each of the case of scaling down the character at the same scaling factor within the screen as on the display screen 32, 33 or 34 shown in FIG. 3, the case of scaling down the characters of the lines excluding the predetermined number of lines containing the focus line, and the case of scaling down the character stepwise (rectilinearly or curvilinearly).

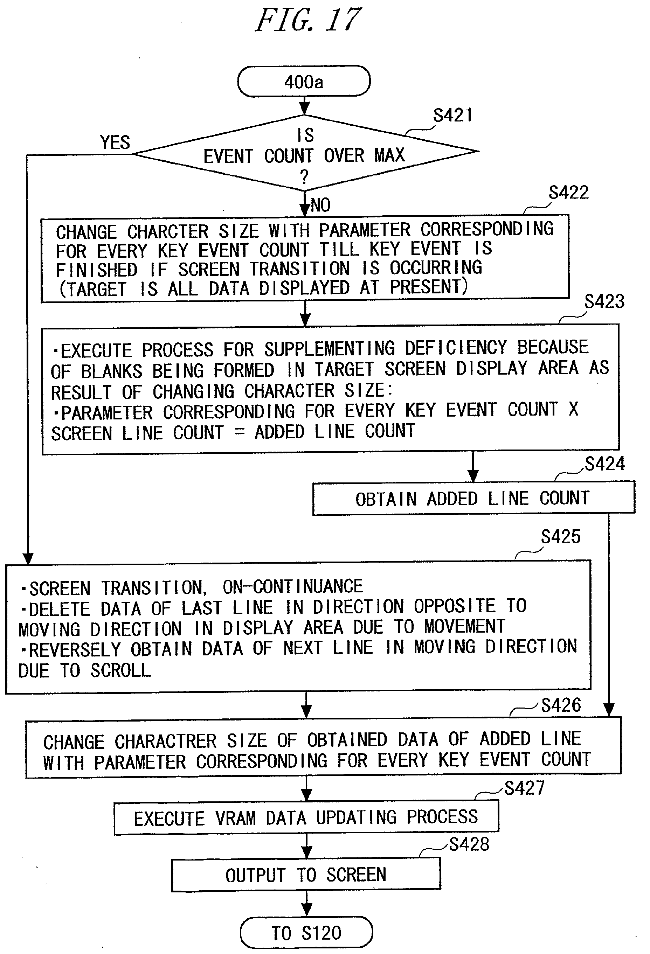

FIG. 17 shows an example of the process of changing the character size corresponding to the time of consecutively pressing the key (which is the number of key events detected by the CPU 1) in the process of changing the character size at the same scaling factor within the screen. That is, the information processing program 10 stores the memory 2 with the predetermined scaling factor per parameter corresponding to the number of key events as a scaling factor of the character size. Then, in the process in S422 or S426, the information processing program 10 changes the character size by use of the scaling factor stored per parameter corresponding to the number of key events when manipulated.

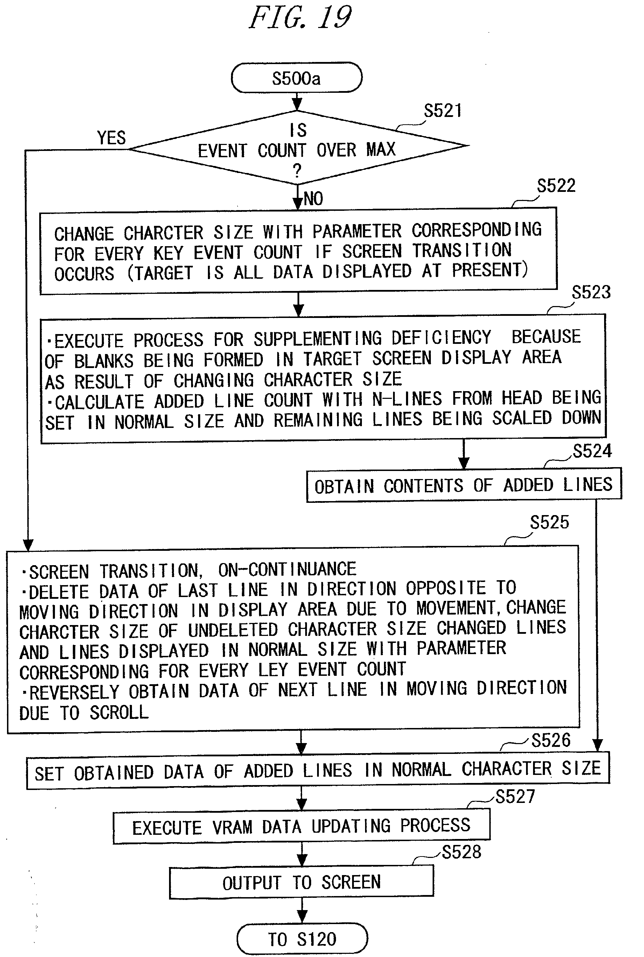

FIG. 19 shows an example of the process of changing the character size corresponding to the time of consecutively pressing the key (which is the number of key events detected by the CPU 1) when scaling down the lines other than the predetermined number-of-lines N containing the focus line (the columns other than the predetermined number-of-columns N containing the focus column) in the focus line (and focus column) emphasized display. To be more specific, the information processing program 10 stores , as a scaling factor of the character size, the predetermined scaling factor beforehand per parameter (ensured in the memory 2) corresponding to the number of key events. Then, the information processing program 10 changes the character size by use of the scaling factor stored per parameter corresponding to the number of key events when manipulated in the process in S522 or S525.

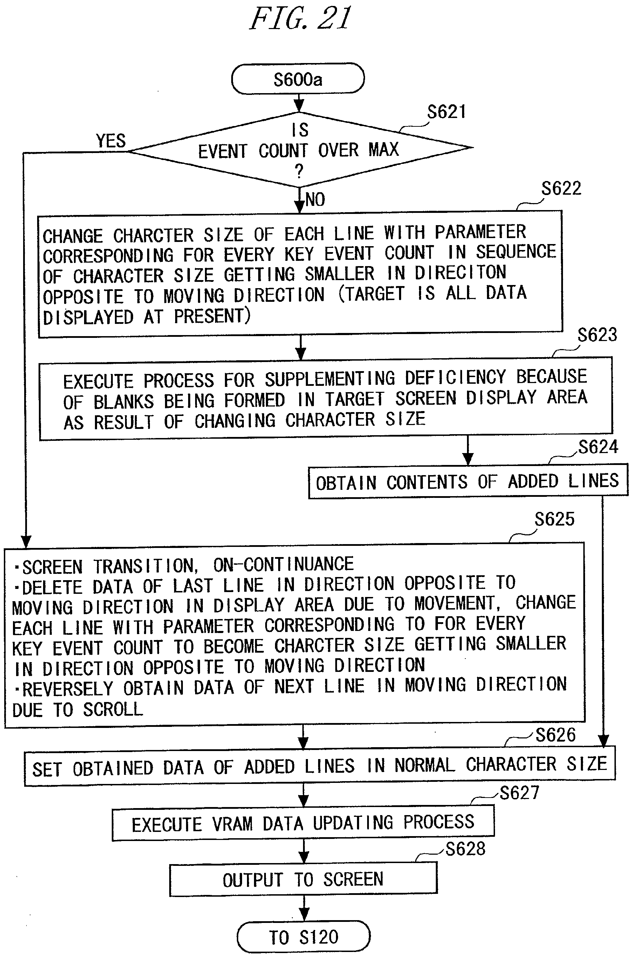

FIG. 21 shows an example of the processing of changing the character size corresponding to the time of consecutively pressing the key (which is the number of key events detected by the CPU 1) in the case of displaying in a way that rectilinearly scales down the character size within the screen. More specifically, the information processing program 10 stores the memory 2 beforehand with the predetermined scaling factor as a scaling factor of the character size per parameter corresponding to the number of key events. Then, the information processing program 10 changes the character size by use of the scaling factor stored corresponding to the number of key events when manipulated in the process in S622 or S625.

Note that there may be used a method of calculating the scaling factor uniquely from the number of key events on the basis of a specified calculation formula (function) other than the method (a table lookup method) of storing the scaling factor per parameter different corresponding to the number of key events as described above.

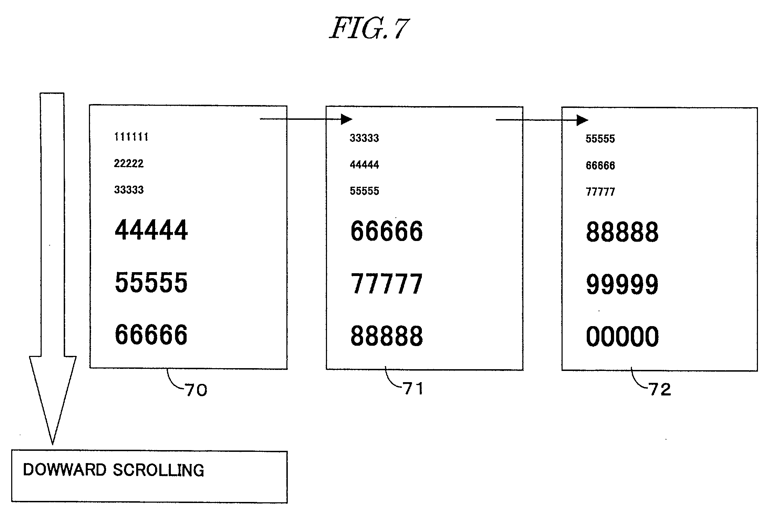

This embodiment has dealt with the character size changing display at the same scaling factor within the screen, the focus line (focus column) emphasized display, the intra screen rectilinear scale-down display process and the intra screen curvilinear scale-down display process as shown on the display screen being moved in FIGS. 3 to 6. The present invention is not, however, limited to those display modes. For instance, the display modes shown in FIGS. 7 through 11 may also be taken for facilitating the grasp of the contents of the text information being scrolled.

Referring to FIG. 7, three lines containing the focus line are displayed with the characters having the normal character size during the downward scroll, while the lines other than these three lines are displayed in scale-down. The same display mode is performed also when the screen is moved sideways.

It has been discussed in this embodiment that when enhancing the focus line (focus column), the text information of the predetermined number of lines (the predetermined number of columns) containing the focus line (focus column) is displayed with the characters having the normal character size. As far as the function of the enhancement is performed, however, the text information of these lines may also be displayed with the characters larger or smaller than the normal character size.

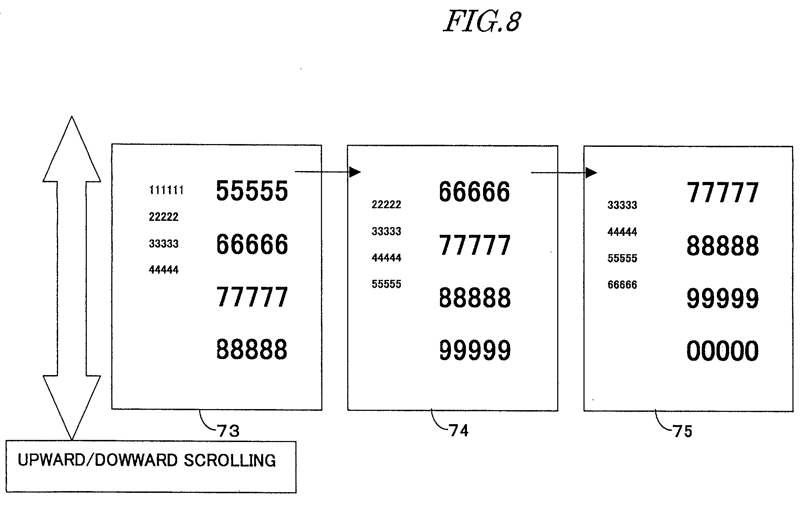

Referring to FIG. 8, in the case of scrolling in the up-and-down directions, the text information on the right side on the screen (which corresponds to five columns from the right in FIG. 8) is displayedwith the characters of the normal character size, while the text information on the left side on the screen is displayed in a character size and at a character pitch that are scaled down at the predetermined scaling factor. As to which column is displayed in the normal size and which column is scaled down, the number and positions of these columns may be specified by an environment setting function of the information processing program 10 and stored as parameters in the memory 2.

This contrivance facilitates grasping the contents being scrolled in displaying, e.g., a spreadsheet and a relational database of such a type that important pieces of information exist in the vicinity of the right end on the screen. Note that when scrolling sideways, specified lines are displayed in the normal character size, and other lines are displayed in scale-down, whereby the same display can be attained.

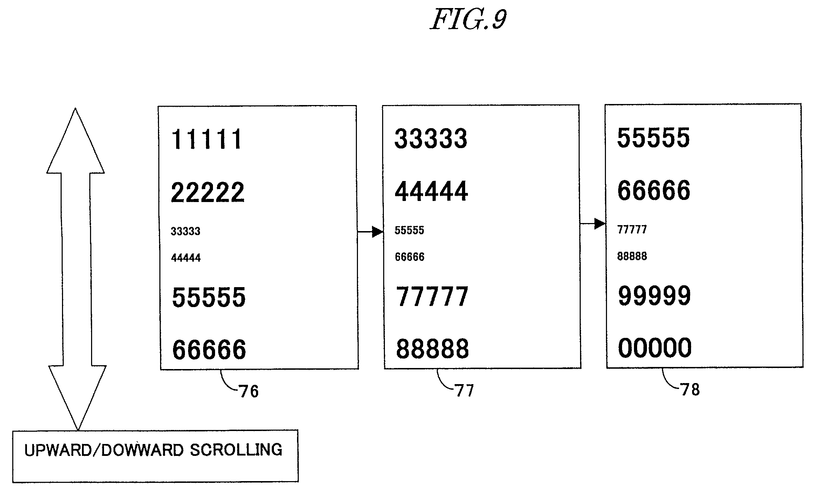

Referring to FIG. 9, when scrolling the up-and-down directions, the upper and lower pieces of information on the screen are displayed in the normal character size, while the lines in the vicinity of the center on the screen are displayed in a character size scaled down at a predetermined scaling factor. In the case of scrolling in the lateral direction, the right and left pieces of information on the screen are displayed in the normal character size, while the columns in the vicinity of the center on the screen are displayed in the character size scaled down at the predetermined scaling factor. This contrivance facilitates relating the display contents in the up-and-down directions or right-and-left directions on the screen.

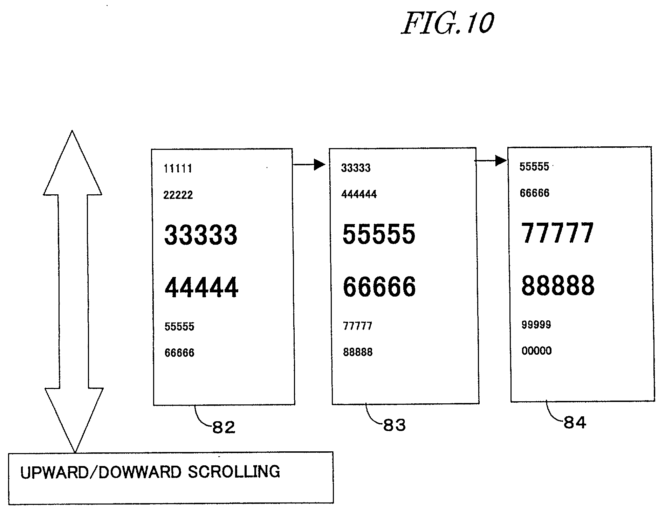

Referring to FIG. 10, when scrolling in the up-and-down directions, the lines in the vicinity of the center on the screen are displayed in the normal character size, and the lines other than those are displayed in the character size scaled down at the predetermined scaling factor. In the case of scrolling in the right-and-left directions, the columns in the vicinity of the center on the screen are displayed similarly in the normal character size, and the columns excluding those are displayed in the character size scaled down at the predetermined scaling factor.

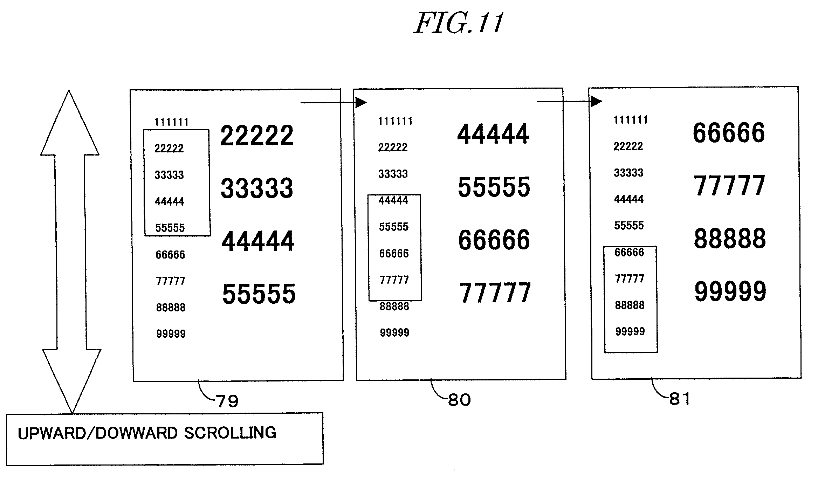

Referring to FIG. 11, in the case of scrolling in the up-and-down directions, the text information to be displayed is displayed with the characters scaled down at the predetermined scaling factor, and some pieces of information are enlarged and displayed in a marginal space on the right side of the screen. For displaying in this way, the information processing program 10 transfers the display data of the scaled down characters disposed on the left side of the screen and the enlarged display data extracted from the left-sided data, disposed on the right side of the screen, to the device driver 12 via the OS 11, and generates a bitmap on the VRAM 4 in a format shown in FIG. 11. The text information is thereby displayed in a broader range on the left side of the screen, while some extracted pieces of information are displayed with the enlarged characters in the marginal space on the right side of the screen. It is therefore feasible to simultaneously grasp the outline in the broader range and confirm the detailed information.

In FIG. 11, the scaled down pieces of information and the enlarged pieces of data extracted therefrom are displayed on the one single screen but may also be displayed on separate screens (windows) . In this case, the window system contained in the OS11 may generate two windows. Then, the information processing program 10 may display the scaled down text information and the enlarged text information extracted therefrom in respective windows.

In this embodiment, when displaying the partial area of the text information, if the partial area start midways of the line and ends midways of the line, the rectangular display area 98 containing the selected partial area 97 is similarly scaled down on one screen (FIG. 26). In this case, all the characters in the rectangular display area 98 containing the partial area 97 selected are scaled down. Instead, however, as shown in FIG. 27, only the characters in the selected partial area are scaled down, and the data of line segments 96 (which are segments of one head line and of one tail line in the rectangular display area) exclusive of the selected partial area, may be displayed in the normal character size.

The screens on the display unit in this embodiment have been exemplified by use of the windows in the multi-window system, however, the embodiment of the present invention is not limited to the multi-window system.

In the present embodiment, for displaying the scaled down characters, the device driver 12 generates the bitmap on the VRAM 4 through the OS 11 in accordance with the indication given from the information processing program 10. The scale-down of the characters is not, however, confined to the program-based operation, and the data generated temporarily as the bitmap on the VRAM 4 may also be scaled down by hardware. FIG. 25 shows this concept. Referring to FIG. 25, image data 93 generated on the VRAM 4 is scaled down by half (1/2) by a filter circuit (which involves thinning out the bitmap). Then, the text information in the moving direction on the screen is taken into a marginal space of an image 94 generated as a result of that scale-down, thereby creating display data 95.

The discussion on the present invention has focused on how the text data are displayed in the embodiment described above. The embodiment of the present invention is not, however, limited to the display of the text data. For instance, the information on only the image and mixed pieces of information of the text information and the image information, may also be processing targets of the present invention. If the image information is treated as the processing target, what is controlled may be a display size, an interval between the pieces of image information and an interval (in the vertical and horizontal directions) between the text information and the image information.

Further, the scaling process shown in FIGS. 3 through 11 may be applied to, for example, the image data (bitmap data or vector data) . This may also be conducted by the program on the CPU or may be actualized by the hardware as shown in FIG. 25.

The information processing program 10 in this embodiment is recorded on a readable-by-computer recording medium. The information processing program 10 is read by a computer and executed together with the device driver 12 and the OS 11 installed into the computer, whereby the information processing system in this embodiment can be actualized. Herein, the readable-by-computer recording medium embraces recording mediums capable of storing information such as data, programs, etc. electrically, magnetically or by optical action, which can be all read by the computer. This type of recording medium may be, e.g., a floppy disk, a magne to-optic disk, a CD-ROM, a CD-R/W, an MO, a DVD, a DAT, an 8mm tape, a memory card, etc. Further, this program may be stored in the hard disk 3 and in the memory 2 of the computer and downloaded into other computers via communication lines. As a result, the computer downloaded with the information processing program 10 can be made to function as the information processing system in this embodiment.
FIG. 1: 3··· HARD DISK, 7··· KEYBOARD, 8··· MOUSE, 5··· CRT CONTROLLER, 2··· MEMORY
FIG. 2: 10··· INFORMATION PROCESSING PROGRAM, 12 ~ 12C··· DEVICE DRIVER, A··· VRAM CRT CONTROLLER, B··· HARD DISK, C··· KEYBOARD, D··· MOUSE
FIG. 3: A··· DISPLAY SOURCE DATA, B··· DISPLAY SCREEN BEFORE MOVEMENT, C··· DOWNWARD SCROLLING, D··· ON-MOVEMENT DISPLAY SCREEN
FIG. 4: A··· DISPLAY SOURCE DATA, B··· DISPLAY SCREEN BEFORE MOVEMENT, C··· UPWARD SCROLLING, D··· ON-MOVEMENT DISPLAY SCREEN
FIG. 5: A··· DISPLAY SCREEN BEFORE MOVEMENT, B··· CURSOR MOVING RIGHTWARD, C··· ON-MOVEMENT DISPLAY SCREEN
FIG. 6: A··· DISPLAY SCREEN BEFORE MOVEMENT, B··· CURSOR MOVING LEFTWARD, C··· ON-MOVEMENT DISPLAY SCREEN
FIG. 7: A··· DOWWARD SCROLLING
FIG.8: A··· UPWARD/DOWWARD SCROLLING
FIG. 9: A··· UPWARD/DOWWARD SCROLLING
FIG. 10: A··· UPWARD/DOWWARD SCROLLING
FIG. 11: A··· UPWARD/DOWWARD SCROLLING
FIG. 12: A··· BEFORE MOVEMENT, B··· ON SCROLL-MOVEMENT, C··· AFTER SCROLL-MOVEMENT, (85) 1··· FILE, EDIT, DISPLAY, TOOL, 2··· SALES STRATEGY MEETING (98' s NEW PRODUCT PLAN), 3··· SUBJECT: SALES STRATEGY MEETING (98' s NEW PRODUCT PLAN), 4··· DATE: 0:00 AM ~ 0:00 AM FEB.5 1998, 5··· PLACE: MEETING ROOM NO.3 ON 8TH FLOOR OF HEADOFFICE, 6··· ATTENDANTS:YOSHIMOTO (CHAIRMAN), CHIEF OF ADVERTISEMENT SECTION, WATANABE (ATTENDING MIDWAYS), CHIEF OF SALES DIVISION, SAKUMA, CHIEF OF SALES SECTION, SAKAMOTO, CHIEF OF SECTION OF FINANCIAL AFFAIRS, ADVERTISEMENT SECTION: OHYAMA, KOYAMA, NAKAYAMA (LEFT MIDWAYS), SALES SECTIN: TANAKA, NAKATA, NAKAMUTA, 7··· CONTENTS (PROCEEDINGS): EXPLANATION OF POLICY OF ADVERTISEMENT SECTION ABOUT EFFECTIVE ADVERTISEMENT PLAN FOR SALING MAIN PRODUCTS OF NEAR YEAR ON LARGE SCALE AND EXPLANATION OF SITUATION IN SECTION OF FINANCIAL AFFAIRS, REQUESTS FROM SALES SECTION ARE MADE IN THE FOLLOWING SEQUENCE: (1) EXPLANATION OF SCEHDULE, (2) QUESTIONS AND ANSWERS, (3) EXAMINATION OF ADVERTISING MEDIA, (4) QUESTIONS AND OPINIONS FROM SECTION OF FINANCIAL AFFAIRS, (5) QUESTIONS AND OPINIONS FROM SALES SECTION, (86): 1··· FILE, EDIT, DISPLAY, TOOL, (87): 1··· FILE, EDIT, DISPLAY, TOOL, 2···MAINLY EXPLANATION OF POLICY OF ADVERTISEMENT SECTION, EXPLANATION OF SITUATION IN SECTION OF FINANCIAL AFFAIRS AND REQUESTS OF SALES SECTION HAVE BEEN COMPREHENSIVELY EXAMINED, THE FOLLOWING IS SEQUENCE: (1) EXPLANATION OF SCEHDULE, (2) QUESTIONS AND ANSWERS, (3) EXAMINATION OF ADVERTISING MEDIA, (4) QUESTIONS AND OPINIONS FROM SECTION OF FINANCIAL AFFAIRS, (5) QUESTIONS AND OPINIONS FROM SALES SECTION
FIG. 13: A··· RANGE SPECIFIED WITHIN ONE CREEN, B··· RANGE SPEIFIED INCLUDING NEXT PAGE ONWARD, (88) 3··· SUBJECT: SALES STRATEGY MEETING (98' s NEW PRODUCT PLAN), 4··· DATE: 0:00 AM ~ 0:00 AM FEB.5 1998, 5··· PLACE: MEETING ROOM NO.3 ON 8TH FLOOR OF HEADOFFICE, 6··· ATTENDANTS:YOSHIMOTO (CHAIRMAN), CHIEF OF ADVERTISEMENT SECTION, WATANABE (ATTENDING MIDWAYS), CHIEF OF SALES DIVISION, SAKUMA, CHIEF OF SALES SECTION, SAKAMOTO, CHIEF OF SECTION OF FINANCIAL AFFAIRS, ADVERTISEMENT SECTION: OHYAMA, KOYAMA, NAKAYAMA (LEFT MIDWAYS), SALES SECTIN: TANAKA, NAKATA, NAKAMUTA, 7··· CONTENTS (PROCEEDINGS): EXPLANATION OF POLICY OF ADVERTISEMENT SECTION ABOUT EFFECTIVE ADVERTISEMENT PLAN FOR SALING MAIN PRODUCTS OF NEAR YEAR ON LARGE SCALE AND EXPLANATION OF SITUATION IN SECTION OF FINANCIAL AFFAIRS, REQUESTS FROM SALES SECTION ARE MADE IN THE FOLLOWING SEQUENCE:
   (1) EXPLANATION OF SCEHDULE
FIG. 14: A··· START, S110··· OBTAIN KEY EVENT, S130··· DOES SCREEN TRANSITION OCCUR ?, S131··· TEXT INFORMATION SELECTING MANIPULATION ?, S132··· KEEP DISPLAY AREA AS IT IS, S800··· EXECUTE PROCESS OF DISPLAYING SELECTED BLOCK, S300··· RETURN DRAWING AREA TO CHARACTER SIZE, LINE PITCH AND COLUMN PITCH BEFORE SCREEN TRANSITION, S400··· EXECUTE CHARACTER SIZE CHANGING DISPLAY PROCESS AT SAME SCALING FACTOR WITHIN SCREEN, S500··· EXECUTE FOCUS LINE (COLUMN) AND ITS VICINITY EMPHASIZED DISPLAY PROCESS, S600··· EXECUTE INTRA SCREEN RECTILINEAR SCALE-DOWN DISPLAY PROCESS, S700··· INTRA SCREEN CURVILINEAR SCALE-DOWN DISPLAY PROCESS, S140··· END OF SCREEN TRANSITION ?, S150··· DISPLAY AT SAME SCALING FACTOR WITHIN SCREEN ?, S160··· FOCUS LINE (COLUMN) AND ITS VICINITY EMPHASIZED DISPLAY ?, S170··· RECTILINEARLY SCALED DOWN WITHIN SCREEN ? B··· TO S120
FIG. 15: S112··· OBTAIN KEY EVENT, S114··· IS DISPLAY BLOCK ON ITS MOVING MANIPULATION ?, S116··· INFORM OF KEY EVENT AND KeyCount, A··· TO S130
FIG. 16: S401··· IS SCREEN TRANSITION EXECUTED ONCE ?, S402··· CHANGE CHARCTER SIZE WITH FIXED VALUE TILL KEY EVENT IS FINISHED IF SCREEN TRANSITION IS OCCURRING (TARGET IS ALL DATA DISPLAYED AT PRESENT), S403··· EXECUTE PROCESS FOR SUPPLEMENTING DEFICIENCY BECAUSE OF BLANKS BEING FORMED IN TARGET SCREEN DISPLAY AREA AS RESULT OF CHANGING CHARACTER SIZE: FIXED VALUE X SCREEN LINE COUNT = ADDED LINE COUNT, S404··· OBTAIN ADDED LINE COUNT, S405··· SCREEN TRANSITION, ON-CONTINUANCE, DELETE DATA OF LAST LINE IN DIRECTION OPPOSITE TO MOVING DIRECTION IN DISPLAY AREA DUE TO MOVEMENT, REVERSELY OBTAIN DATA OF NEXT LINE IN MOVING DIRECTION DUE TO SCROLL, S406··· CHANGE CHARACTRER SIZE OF OBTAINED DATA OF ADDED LINE WITH FIXED VALUE, S407··· EXECUTE VRAM DATA UPDATING PROCESS, S408··· OUTPUT TO SCREEN, A··· TO S120
FIG. 17: S421··· IS EVENT COUNT OVER MAX ?, S422··· CHANGE CHARCTER SIZE WITH PARAMETER CORRESPONDING FOR EVERY KEY EVENT COUNT TILL KEY EVENT IS FINISHED IF SCREEN TRANSITION IS OCCURRING (TARGET IS ALL DATA DISPLAYED AT PRESENT), S423··· EXECUTE PROCESS FOR SUPPLEMENTING DEFICIENCY BECAUSE OF BLANKS BEING FORMED IN TARGET SCREEN DISPLAY AREA AS RESULT OF CHANGING CHARACTER SIZE: PARAMETER CORRESPONDING FOR EVERY KEY EVENT COUNT X SCREEN LINE COUNT = ADDED LINE COUNT, S424··· OBTAIN ADDED LINE COUNT, S425··· SCREEN TRANSITION, ON-CONTINUANCE, DELETE DATA OF LAST LINE IN DIRECTION OPPOSITE TO MOVING DIRECTION IN DISPLAY AREA DUE TO MOVEMENT, REVERSELY OBTAIN DATA OF NEXT LINE IN MOVING DIRECTION DUE TO SCROLL, S426··· CHANGE CHARACTRER SIZE OF OBTAINED DATA OF ADDED LINE WITH PARAMETER CORRESPONDING FOR EVERY KEY EVENT COUNT, S427··· EXECUTE VRAM DATA UPDATING PROCESS, S428··· OUTPUT TO SCREEN, A··· TO S120
FIG. 18: S501··· IS SCREEN TRANSITION EXECUTED ONCE ?, S502··· CHANGE CHARCTER SIZE WITH FIXED VALUE TILL KEY EVENT IS FINISHED IF SCREEN TRANSITION IS OCCURRING (TARGET IS ALL DATA DISPLAYED AT PRESENT), S503··· EXECUTE PROCESS FOR SUPPLEMENTING DEFICIENCY BECAUSE OF BLANKS BEING FORMED IN TARGET SCREEN DISPLAY AREA AS RESULT OF CHANGING CHARACTER SIZE, CALCULATE ADDED LINE COUNT WITH N-LINES FROM HEAD BEING SET IN NORMAL SIZE AND REMAINING LINES BEING SCALED DOWN, S504··· OBTAIN CONTENTS OF ADDED LINES, S505··· SCREEN TRANSITION, ON-CONTINUANCE, DELETE DATA OF LAST LINE IN DIRECTION OPPOSITE TO MOVING DIRECTION IN DISPLAY AREA DUE TO MOVEMENT, CHANGE CHARACTER SIZE OF LINES DISPLAYED IN NORMAL SIZE WITH FIXED VALUE, REVERSELY OBTAIN DATA OF NEXT LINE IN MOVING DIRECTION DUE TO SCROLL, S506··· SET OBTAINED DATA OF ADDED LINES IN NORMAL CHARACTER SIZE AND SCALE DOWN OTHER LINES, THUS CREATING DISPLAY DATA, S507··· EXECUTE VRAM DATA UPDATING PROCESS, S508··· OUTPUT TO SCREEN, A··· TO S120
FIG. 19: S521··· IS EVENT COUNT OVER MAX ?, S522··· CHANGE CHARCTER SIZE WITH PARAMETER CORRESPONDING FOR EVERY KEY EVENT COUNT IF SCREEN TRANSITION OCCURS (TARGET IS ALL DATA DISPLAYED AT PRESENT), S523··· EXECUTE PROCESS FOR SUPPLEMENTING DEFICIENCY BECAUSE OF BLANKS BEING FORMED IN TARGET SCREEN DISPLAY AREA AS RESULT OF CHANGING CHARACTER SIZE, CALCULATE ADDED LINE COUNT WITH N-LINES FROM HEAD BEING SET IN NORMAL SIZE AND REMAINING LINES BEING SCALED DOWN, S524··· OBTAIN CONTENTS OF ADDED LINES, S525··· SCREEN TRANSITION, ON-CONTINUANCE, DELETE DATA OF LAST LINE IN DIRECTION OPPOSITE TO MOVING DIRECTION IN DISPLAY AREA DUE TO MOVEMENT, CHANGE CHARCTER SIZE OF UNDELETED CHARACTER SIZE CHANGED LINES AND LINES DISPLAYED IN NORMAL SIZE WITH PARAMETER CORRESPONDING FOR EVERY LEY EVENT COUNT, REVERSELY OBTAIN DATA OF NEXT LINE IN MOVING DIRECTION DUE TO SCROLL, S526··· SET OBTAINED DATA OF ADDED LINES IN NORMAL CHARACTER SIZE, S527··· EXECUTE VRAM DATA UPDATING PROCESS, S528··· OUTPUT TO SCREEN, A··· TO S120
FIG. 20: S601··· IS SCREEN TRANSITION EXECUTED ONCE ?, S602··· CHANGE CHARCTER SIZE WITH FIXED VALUE FOR EVERY LINE IN SEQUENCE OF CHARACTER SIZE GETTING SMALLER IN DIRECTION OPPOSITE TO MOVING DIRECTION (TARGET IS ALL DATA DISPLAYED AT PRESENT), S603··· EXECUTE PROCESS FOR SUPPLEMENTING DEFICIENCY BECAUSE OF BLANKS BEING FORMED IN TARGET SCREEN DISPLAY AREA AS RESULT OF CHANGING CHARACTER SIZE, S604··· OBTAIN CONTENTS OF ADDED LINES, S605··· SCREEN TRANSITION, ON-CONTINUANCE, DELETE DATA OF LAST LINE IN DIRECTION OPPOSITE TO MOVING DIRECTION IN DISPLAY AREA DUE TO MOVEMENT, CHANGE CHARACTER SIZE OF EACH LINE WITH FIXED VALUE TO BECOME CHARACTER SIZE GETTING SMALLER IN DIRECITON OPPOSITE TO MOVING DIRECTION, REVERSELY OBTAIN DATA OF NEXT LINE IN MOVING DIRECTION DUE TO SCROLL, S606··· SET OBTAINED DATA OF ADDED LINES IN NORMAL CHARACTER SIZE, S607··· EXECUTE VRAM DATA UPDATING PROCESS, S608··· OUTPUT TO SCREEN, A··· TO S120
FIG. 21: S621··· IS EVENT COUNT OVER MAX ?, S622··· CHANGE CHARCTER SIZE OF EACH LINE WITH PARAMETER CORRESPONDING FOR EVERY KEY EVENT COUNT IN SEQUENCE OF CHARACTER SIZE GETTING SMALLER IN DIRECITON OPPOSITE TO MOVING DIRECTION (TARGET IS ALL DATA DISPLAYED AT PRESENT), S623··· EXECUTE PROCESS FOR SUPPLEMENTING DEFICIENCY BECAUSE OF BLANKS BEING FORMED IN TARGET SCREEN DISPLAY AREA AS RESULT OF CHANGING CHARACTER SIZE, S624··· OBTAIN CONTENTS OF ADDED LINES, S625··· SCREEN TRANSITION, ON-CONTINUANCE, DELETE DATA OF LAST LINE IN DIRECTION OPPOSITE TO MOVING DIRECTION IN DISPLAY AREA DUE TO MOVEMENT, CHANGE EACH LINE WITH PARAMETER CORRESPONDING TO FOR EVERY KEY EVENT COUNT TO BECOME CHARCTER SIZE GETTING SMALLER IN DIRECTION OPPOSITE TO MOVING DIRECTION, REVERSELY OBTAIN DATA OF NEXT LINE IN MOVING DIRECTION DUE TO SCROLL, S626··· SET OBTAINED DATA OF ADDED LINES IN NORMAL CHARACTER SIZE, S627··· EXECUTE VRAM DATA UPDATING PROCESS, S628··· OUTPUT TO SCREEN, A··· TO S120
FIG. 22: S701··· OBTAIN CONTENTS OF ADDED LINES, S702··· SET OBTAINED DATA OF ADDED LINES AT CENTER OF NORMAL DISTRIBUTION AND IN NORMAL FONT SIZE, S703··· CHANGE DATA IN DIRECTION OPPOSITE TO SCROLLING IN EACH LINE IN CHARCTER SIZE CORRESPONDING TO NORMAL DISTRIBUTION (TARGET IS ALL DATA DISPLAYED AT PRESENT), S704··· EXECUTE OF PROCESS OF UPDATING VRAM DATA, S705··· OUTPUT TO SCREEN, A··· S110
FIG. 23: S801··· IS SELECTIVE DISPLAY ENDED ?, S802··· OBTAIN SELECTED LINE COUNT, S803··· CALCUALTE SCALING FACTOR, S805··· EXECUTE PROCESS OF UPDATING VRAM DATA, S806··· OUTPUT TO SCREEN, A··· TO S110,
   S804··· RETURN CHARACTER SIZE TO ORIGINAL SIZE
FIG. 24: (LATERAL)
FIG. 25: (LATERAL)

## Claims

1. An information display method comprising:
displaying information in a predetermined display area;
detecting a manipulation of changing a display block of the information displayed in the display area; and
displaying the information by changing an attribute in accordance with the detection of the changing manipulation.

2. An information display method according to claim 1, wherein the attribute is a display size of each of elements structuring the information, or a pitch between the elements structuring the information.

3. An information display method according to claim 2, wherein the display size or the pitch defined as the attribute is scaled down smaller than in a normal display state for displaying the information in the predetermined display area.

4. An information display method according to claim 1, wherein the information is displayed in a way that changes the attribute in a direction of changing the display block.

5. An information display method according to claim 2, wherein the information is text information,
the structuring elements are characters of the text information, and
during the changing manipulation, the text information is displayed in different character sizes or at different character pitches between one or more specified lines within the display area and lines other than the specified lines, or between one or more specified columns within the display area and columns other than the specified columns, or between specified segments in the display area and a region excluding the specified segments.

6. An information display method according to claim 1, wherein during the changing manipulation, the information is displayed in a way that sets a different attribute corresponding to a position in the display area.

7. An information display method according to claim 1, wherein during the changing manipulation, the information with the attribute changed is displayed in a part within the predetermined display area, and
the information is displayed with a different attribute in other part within the display area.

8. An information display method according to claim 1, wherein during the changing manipulation, the information with the attribute changed is displayed in the predetermined display area, and
the information is displayed with a different attribute in a display area different from the former display area.

9. An information display method according to claim 1,
wherein the attribute is set based on a speed at which the display block is changed.

10. An information display method according to claim 1,
wherein the information is text information, and
the structuring elements are characters of the text information.

11. An information display method comprising:
selecting a part of information from processing target information;
calculating a size of the part of information; and
changing an attribute of the information,
wherein if the size of the selected part of information exceeds a size with which the information can be displayed within a predetermined display area, the selected part of information is displayed within the display area by changing the attribute of the part of information or information in an area that contains this part of information.

12. An information processing system comprising:
a display control unit for displaying processing target information in a predetermined display area;
a detection unit for detecting a manipulation of changing a display block of the information displayed in the display area; and
a display information control unit for getting the information displayed in the display area by changing an attribute in accordance with the detection of the changing manipulation.

13. An information processing system according to claim 12, wherein the attribute is a display size of each of elements structuring the information, or a pitch between the elements structuring the information.

14. An information processing system according to claim 13, wherein said display information control unit scales down the display size or the pitch defined as the attribute smaller than in a normal display state for displaying the information in the predetermined display area.

15. An information processing system according to claim 12, wherein said display information control unit gets the information displayed in a way that changes the attribute in a direction of changing the display block.

16. An information processing system according to claim 13, wherein the information is text information,
the structuring elements are characters of the text information, and
said display information control unit, during the changing manipulation, gets the text information displayed in different character sizes or at different character pitches between one or more specified lines within the display area and lines other than the specified lines , or between one or more specified columns within the display area and columns other than the specified columns, or between specified segments in the display area and a region excluding the specified segments.

17. An information processing system according to claim 12, wherein said display information control unit, during the changing manipulation, gets the information displayed in a way that sets a different attribute corresponding to a position in the display area.

18. An information processing system according to claim 12, wherein said display information control unit, during the changing manipulation, gets the information with the changed attribute displayed in a part within the predetermined display area, and gets the information displayed with a different attribute in other part within the display area.

19. An information processing system according to claim 12, wherein said display information control unit, during the changing manipulation, gets the information with the changed attribute displayed in the predetermined display area, and gets the information displayed with a different attribute in a display area different from the former display area.

20. An information processing system according to claim 12, wherein said display information control unit sets the attribute on the basis of a speed at which the display block is changed.

21. An information processing system according to claim 12, wherein the information is text information, and
the structuring elements are characters of the text information.

22. An information processing system comprising:
a manipulation unit for selecting a part of information from processing target information;
a calculation unit for calculating a size of the part of information; and
an attribute changing unit for changing an attribute of the information,
wherein said attribute changing unit, if the size of the selected part of information exceeds a size with which the information can be displayed within a predetermined display area, gets the selected part of information displayed within the display area by changing the attribute of the part of information or information in an area that contains this part of information.

23. A storage medium readable by a machine, tangibly embodying a program of instructions executable by the machine to perform method steps comprising:
displaying information in a predetermined display area;
detecting a manipulation of changing a display block of the information displayed in the display area; and
displaying the information by changing an attribute in accordance with the detection of the changing manipulation.

24. A storage medium readable by a machine tangibly embodying a program according to claim 23, wherein the attribute is a display size of each of elements structuring the information, or a pitch between the elements structuring the information.

25. A storage medium readable by a machine tangibly embodying a program according to claim 24, wherein the display size or the pitch defined as the attribute is scaled down smaller than in a normal display state for displaying the information in the predetermined display area.

26. A storage medium readable by a machine tangibly embodying a program according to claim 23, wherein the information is displayed in a way that changes the attribute in a direction of changing the display block.

27. A storage medium readable by a machine tangibly embodying a program according to claim 24, wherein the information is text information,
the structuring elements are characters of the text information, and
during the changing manipulation, the text information is displayed in different character sizes or at different character pitches between one or more specified lines within the display area and lines other than the specified lines, or between one or more specified columns within the display area and columns other than the specified columns, or between specified segments in the display area and a region excluding the specified segments.

28. A storage medium readable by a machine tangibly embodying a program according to claim 23, wherein during the changing manipulation, the information is displayed in a way that sets a different attribute corresponding to a position in the display area.

29. A storage medium readable by a machine tangibly embodying a program according to claim 23, wherein during the changing manipulation, the information with the attribute changed is displayed in a part within the predetermined display area, and
the information is displayed with a different attribute in other part within the display area.

30. A storage medium readable by a machine tangibly embodying a program according to claim 23, wherein during the changing manipulation, the information with the attribute changed is displayed in the predetermined display area, and
the information is displayed with a different attribute in a display area different from the former display area.

31. A storage medium readable by a machine tangibly embodying a program according to claim 23, wherein the attribute is set based on a speed at which the display block is changed.

32. A storage medium readable by a machine tangibly embodying a program according to claim 23, wherein the information is text information, and
the structuring elements are characters of the text information.

33. A storage medium readable by a machine, tangibly embodying a program of instructions executable by the machine to perform method steps comprising:
selecting a part of information from processing target information;
calculating a size of the part of information; and
changing an attribute of the information,
wherein if the size of the selected part of information exceeds a size with which the information can be displayed within a predetermined display area, the selected part of information is displayed within the display area by changing the attribute of the part of information or information in an area that contain this part of information.
